# EUROPEAN PATENT SPECIFICATION

(11) **EP 4 180 700 B1**
(45) Date of publication and mention of the grant of the patent: **16.10.2024**
(21) Application number: 22205780.4
(22) Date of filing: 07.11.2022
(51) Int. Cl.: F16K 31/04, F16K 11/074, A47C 7/46, A47C 27/08, A47C 27/10

(54) **AIR SUPPLY DEVICE**
LUFTZUFUHRVORRICHTUNG
DISPOSITIF D'ALIMENTATION EN AIR

(30) Priority: 10.11.2021 JP 2021183359
(43) Date of publication of application: 17.05.2023
(73) Proprietor: Funai Electric Co., Ltd., Daito, Osaka, 574-0013 (JP)
(72) Inventor: WAKABAYASHI, Naoyuki, Daito, Osaka, 574-0013 (JP); MURAYAMA, Manabu, Daito, Osaka, 574-0013 (JP); SOGAWA, Teruaki, Daito, Osaka, 574-0013 (JP); HAMADA, Shingo, Daito, Osaka, 574-0013 (JP); YODA, Hideki, Daito, Osaka, 574-0013 (JP)
(74) Representative: Global IP Europe Patentanwaltskanzlei

(56) References cited:
- EP-A2- 2 060 836
- IT-A1- VR20 100 238
- US-A1- 2006 137 986
- US-A1- 2020 229 610

## Description

### BACKGROUND

### Field of the Invention

This invention generally relates to an air supply device. More specifically, this invention relates to an air supply device provided with a flow path switching unit. Background Information

Generally, an air supply device is equipped with a flow path switching unit (see, for example, JP 2000-1977 A).

The above-mentioned JP 2000-1977 A discloses a device equipped with an air pump and a controller. In JP 2000-1977 A, it is configured such that a rotary valve housed in the controller is rotated to supply air from the air pump to an air mattress or exhaust air from the air mattress. In JP 2000-1977 A, a groove which serves as a flow path when supplying air is formed on the inner circumference of the rotary valve, and a groove which serves as a flow path when exhausting air is formed on the outer circumference of the rotary valve.

US 2006/137986 A1 discloses an air supply device comprising: an enclosure having a sealed interior space for storing air therein; a pump provided outside the enclosure, the pump being configured to supply air to the interior space of the enclosure; and a flow path switching unit including a pedestal part mounted inside the enclosure, a rotating part rotatably mounted on the pedestal part, the rotating part having an enclosure interior space communication portion and a groove portion, and a drive unit configured to rotate the rotating part, the enclosure including an air supply port configured to supply air supplied from the pump to the interior space of the enclosure, an air discharge port configured to discharge air from the groove portion of the rotating part, and at least one object connection port configured to supply air to or exhaust air from at least one object, the pedestal part including at least one first hole that is communicated to the at least one object connection port, and a second hole that is communicated to the air discharge port, the enclosure interior space communication portion being communicated to the air supply port through the interior space of the enclosure, and the groove portion being separated from the enclosure interior space communication portion.

US 2020/229610 A1, EP 2 060 836 A2, and IT VR20 100 238 A1 each disclose an air supply device which has a flow path switching unit including a pedestal part and a rotating part rotatably mounted on the pedestal part.

### SUMMARY

However, when a plurality of grooves are provided in a flow path switching unit (e.g., a rotary valve), as in the above-mentioned JP 2000-1977 A, there is a problem that the flow path switching unit becomes larger and the air supply device becomes larger because the grooves are provided on the outer circumference.

One object of the present invention is to provide an air supply device capable of suppressing enlargement of the flow path switching unit.

The object above is achieved by the air supply device defined by the appended claim 1. Further advantageous effects can be obtained by the preferred embodiments defined by the appended dependent claims.
(1) As a reference example, an air supply device comprises an enclosure, a pump, and a flow path switching unit. The enclosure has a sealed interior space for storing air therein. The pump is provided outside the enclosure. The pump is configured to supply air to the interior space of the enclosure. The flow path switching unit including a pedestal part mounted inside the enclosure, a rotating part rotatably mounted on the pedestal part, the rotating part having an enclosure interior space communication portion and a groove portion, and a drive unit configured to rotate the rotating part. The enclosure includes an air supply port configured to supply air from the pump to the interior space of the enclosure, an air discharge port configured to discharge air from the groove portion of the rotating part, and at least one object connection port configured to supply air to or exhaust air from at least one object. The pedestal part includes at least one first hole that is communicated to the at least one object connection port, and a second hole that is communicated to the air discharge port. The enclosure interior space communication portion is communicated to the air supply port through the interior space of the enclosure. The groove portion is separated from the enclosure interior space communication portion.
(2) In a preferred modification of the air supply device mentioned above, the enclosure interior space communication portion includes a notch or a through hole that is provided on an outer portion of the rotating part. The notch or the through hole opens toward the pedestal part and the enclosure so as to be communicated to the air supply port through the interior space of the enclosure. The groove portion is provided on an inner portion of the rotating part. The groove portion opens toward the pedestal part so as not to be directly communicated to the enclosure interior space communication portion.
   The air supply device according to this modification, as mentioned above, comprises the flow path switching unit including the pedestal part mounted inside the enclosure, the rotating part rotatably mounted on the pedestal part, the rotating part having the enclosure interior space communication portion and the groove portion, and the drive unit configured to rotate the rotating part. The enclosure interior space communication portion includes the notch or the through hole that is provided on the outer portion of the rotating part, the notch or the through hole opening toward the pedestal part and the enclosure so as to be communicated to the air supply port through the interior space of the enclosure, for example. The groove portion is provided on the inner portion of the rotating part, the groove portion opening toward the pedestal part so as not to be directly communicated to the enclosure interior space communication portion, for example. With this configuration, the rotating part includes the enclosure interior space communication portion on the outer portion of the rotating part. Therefore, the sealed interior space of the enclosure can be used as a flow path for supplying air or exhausting air, and thus there is no need to provide a groove for forming a flow path in an outer circumference of the rotating part. With this configuration, enlargement of the flow path switching unit can be suppressed. As a result, enlargement of the air supply device can be suppressed.
(3) According to the reference example mentioned above, when viewed from the pedestal part side, the enclosure interior space communication portion has an elliptical shape inwardly depressed. The groove portion has a circular portion that is communicated to the second hole, and a protruding portion that is selectively communicated to the at least one first hole and that outwardly protrudes from the circular portion. With this configuration, outer circumferences of the enclosure interior space communication portion and the groove portion can be aligned with outer circumferences of the at least one first hole and the second hole without misalignment. Thus, it is possible to prevent supplying air to the at least one object or exhausting air from the at least one object in a state in which the at least one first hole and the second hole are partially blocked by the rotating part.
(4) In further another preferred modification of any one of the air supply devices mentioned above, the air supply device is configured such that: one of the at least one first hole is located in the enclosure interior space communication portion when supplying air to one of the at least one object, and the one of the at least one first hole and the second hole are located in the groove portion when exhausting air from the one of the at least one object.
(5) In further another preferred modification of the air supply device mentioned above, the air supply device further comprises a control unit configured to control the drive unit to rotate the rotating part to a position at which a position of one of the at least one first hole and a position of the enclosure interior space communication portion coincide to each other when supplying air to one of the at least one object, and the control unit being configured to control the drive unit to rotate the rotating part to a position at which the one of the at least one first hole and the second hole are communicated to each other through the groove portion when exhausting air from the one of the at least one object. With this configuration, when supplying air to the one of the at least one object, the enclosure interior space communication portion and the one of the at least one first hole are communicated to each other and a flow path is formed from the interior space of the enclosure to the one of the at least one object. Thus, air inside the enclosure can be supplied to the one of the at least one object. Also, when exhausting air from the one of the at least one object, the one of the at least one first hole and the second hole are communicated to each other and a flow path is formed from the one of the at least one object to the air discharge port. Thus, the air can be exhausted from the one of the at least one object.
(6) In further another preferred modification of any one of the air supply devices mentioned above, the control unit is configured to switch the at least one object for supplying and exhausting air by rotating the rotating part at a predetermined angle or at a predetermined interval. With this configuration, switching of the at least one object can be easily performed by setting the predetermined angle or the predetermined interval in accordance with positions of the at least one first hole and the second hole.
(7) In further another preferred modification of any one of the air supply devices mentioned above, the air supply device further comprises a pressure sensor configured to measure a pressure of air supplied to the interior space of the enclosure or exhausted from the interior space of the enclosure. When supplying air to the one of the at least one object, the control unit is configured to control the drive unit to rotate the rotating part to a position at which no flow path is formed between the at least one first hole and the second hole while the pressure detected by the pressure sensor is higher than or equal to a predetermined value. With this configuration, the control unit can acquire that air has been sufficiently supplied to the one of the at least one object based on the fact that air pressure in the one of the at least one object in a full air state has become more than or equal to the predetermined value. In addition, when the pressure detected by the pressure sensor is more than or equal to the predetermined value, no flow path is formed between the at least one first hole and the second hole. Thus, no flow path is formed from the one of the at least one object to the air discharge port, and it is possible to prevent that air is discharged from the one of the at least one object.
(8) In further another preferred modification of any one of the air supply devices mentioned above, when exhausting air from the one of the at least one object, the control unit is configured to control the drive unit to rotate the rotating part to a position at which no flow path is formed between the at least one first hole and the second hole while the pressure detected by the pressure sensor is less than a predetermined value. With this configuration, by setting the predetermined value to an air pressure in the one of the at least one object in a sufficiently exhausted state, it is possible for the control unit to acquire that air has been sufficiently exhausted from the one of the at least one object. Also, no flow path is formed between the at least one first hole and the second hole while the pressure is less than the predetermined value. Thus, no flow path is formed from the one of the at least one object to the air discharge port, and it is possible to prevent that air is excessively discharged from the object.
(9) In further another preferred modification of any one of the air supply devices mentioned above, the control unit is configured to stop a drive of the pump when rotating the rotating part. With this configuration, for example, when supplying air to one object by communicating one of a plurality of first holes to the enclosure interior space communication portion, it is possible to prevent that air supplied to the interior space of the enclosure is supplied by the pump to other object by communicating other first hole to the enclosure interior space communication portion during rotation of the rotating part.
(10) In further another preferred modification of any one of the air supply devices mentioned above, the rotating part includes a gear portion formed on an outer circumferential surface of the rotating part, and the control unit is configured to control the drive unit to rotate the rotating part in a state in which the drive unit and the gear portion are engaged. With this configuration, the rotating part can function as a reduction gear by varying the number of teeth between the drive unit and the gear portion.
(11) In further another preferred modification of any one of the air supply devices mentioned above, the enclosure includes at least one external air supply and exhaust port for supplying air from an outside of the enclosure to the interior space of the enclosure or exhausting air from the interior space of the enclosure to the outside of the enclosure. The pedestal part includes at least one third hole that is communicated to the at least one external air supply and exhaust port.
(12) In further another preferred modification of any one of the air supply devices mentioned above, the air supply device is configured such that: one of the at least one first hole is located in the enclosure interior space communication portion and the second hole and one of the at least one third hole are located in the groove portion when supplying air to one of the at least one object. The one of the at least one first hole and the second hole are located in the groove portion and the one of the at least one third hole is located in the enclosure interior space communication portion when exhausting air from the one of the at least one object.
(13) In further another preferred modification of any one of the air supply devices mentioned above, the air discharge port is connected to an air intake port of the pump.
(14) In further another preferred modification of any one of the air supply devices mentioned above, when supplying air to the one of the at least one object, the control unit is configured to control the drive unit to rotate the rotating part such that the enclosure interior space communication portion forms a flow path between one of the at least one first hole and the air supply port through the interior space of the enclosure and the groove portion forms a flow path between the second hole and one of the at least one third hole. When exhausting air from the one of the at least one object, the control unit is configured to control the drive unit to rotate the rotating part such that the enclosure interior space communication portion forms a flow path between the air supply port and the one of the at least one third hole through the interior space of the enclosure and the groove portion forms a flow path between the one of the at least one first hole and the second hole. With this configuration, when supplying air to the one of the at least one object, air flows in the order of the one of the at least one third hole, the second hole, the pump, the air supply port, the interior space of the enclosure, the one of the at least one first hole and the one of the at least one object from the external air supply and exhaust port. Thus, air can be supplied to the one of the at least one object from the outside of the enclosure. Also, when exhausting air from the one of the at least one object, air flows in the order of the one of the at least one first hole, the second hole, the pump, the air supply port, the one of the at least one third hole and the external air supply and exhaust port from the one of the at least one object. Thus, air inside the one of the at least one object can be discharged to the outside of the enclosure.
(15) In further another preferred modification of any one of the air supply devices mentioned above, the at least one first hole and the at least one third hole include a plurality of first holes and a plurality of third holes that are provided corresponding to a plurality of objects. The control unit is configured to switch the at least one object for supplying and exhausting air by rotating the rotating part to switch the first holes and the third holes to be communicated to the enclosure interior space communication portion and the groove portion. With this configuration, among the plurality of the first holes and the plurality of the third holes, air flows to a first hole and a third hole that are communicated to the enclosure interior space communication portion and the groove portion, while air does not flow to other first holes and other third holes. With this configuration, it is possible to supply and exhaust air to a desired object among the plurality of objects.
(16) In further another preferred modification of any one of the air supply devices mentioned above, the groove portion has a circular portion and a protruding portion that is communicated to the circular portion and outwardly protrudes from the circular portion. One of the at least one first hole is located in the enclosure interior space communication portion and the second hole is located in the circular portion when supplying air to one of the at least one object. The one of the at least one first hole is located in the protruding portion and the second hole is located in the circular portion when exhausting air from the one of the at least one object.
(17) In further another preferred modification of any one of the air supply devices mentioned above, the one of the at least one first hole is blocked by the rotating part when maintaining an inflated state or a deflated state of the one of the at least one object.
(18) In further another preferred modification of any one of the air supply devices mentioned above, the groove portion has a circular portion and a protruding portion that is communicated to the circular portion and outwardly protrudes from the circular portion. One of the at least one first hole is located in the enclosure interior space communication portion, the second hole is located in the circular portion and one of the at least one third hole is located in the protruding portion when supplying air to one of the at least one object. The one of the at least one first hole is located in the protruding portion, the second hole is located in the circular portion and the one of the at least one third hole is located in the enclosure interior space communication portion when exhausting air from the one of the at least one object.
(19) In further another preferred modification of any one of the air supply devices mentioned above, the one of the at least one first hole and the one of the at least one third hole are blocked by the rotating part when maintaining an inflated state or a deflated state of the one of the at least one object.
(20) In further another preferred modification of any one of the air supply devices mentioned above, the groove portion has a circular portion and a protruding portion that is communicated to the circular portion and outwardly protrudes from the circular portion, the protruding portion being located opposite to the enclosure interior space communication portion with respect to a rotational center of the rotating part.

According to the present invention, it is possible to provide an air supply device capable of suppressing enlargement of the flow path switching unit.

### BRIEF DESCRIPTION OF THE DRAWINGS

Referring now to the attached drawings which form a part of this original disclosure:
FIG. 1 is a diagram showing an example of an air supply device.
FIG. 2 is a circuit diagram of the air supply device in a first embodiment.
FIG. 3 is a diagram showing an example in which first holes and a second hole are arranged on a bottom of an enclosure in the first embodiment.
FIG. 4 is a cross-sectional view showing the structure of a flow path switching unit in the first embodiment.
FIG. 5 is a diagram showing an example of a pedestal part in the first embodiment.
FIG. 6 is a diagram showing an example of a rotating part.
FIG. 7 is a diagram showing a state in which the flow path switching unit and objects (bag-shaped members) are connected in the first embodiment.
FIG. 8 is a diagram illustrating a gear portion.
FIG. 9 is a diagram showing an example of a detector plate in the first embodiment.
FIG. 10 is a diagram illustrating an air flow when supplying air to an object (a bag-shaped member) in the first embodiment.
FIG. 11 is a diagram illustrating an air flow when exhausting air from the object (the bag-shaped member) in the first embodiment.
FIG. 12 is a diagram illustrating a maintained state in which the objects (the bag-shaped members) are maintained in an inflated state or in a deflated state in the first embodiment.
FIG. 13 is a control flow of a control unit when supplying air to the object (the bag-shaped member).
FIG. 14 is a control flow of the control unit when exhausting air from the object (the bag-shaped member).
FIG. 15 is a circuit diagram of an air supply device in a second embodiment.
FIG. 16 is a diagram showing an example in which first holes, a second hole and third holes are arranged on a bottom of an enclosure in the second embodiment.
FIG. 17 is a cross-sectional view showing the structure of a flow path switching unit in the second embodiment.
FIG. 18 is a diagram showing an example of a pedestal part in the second embodiment.
FIG. 19 is a diagram showing a state in which the flow path switching unit and objects (bag-shaped members) are connected in the second embodiment.
FIG. 20 is a diagram showing an example of a detector plate in the second embodiment.
FIG. 21 is a diagram illustrating air flow when supplying air to an object (a bag-shaped member) in the second embodiment.
FIG. 22 is a diagram illustrating air flow when exhausting air from the object (the bag-shaped member) in the second embodiment.
FIG. 23 is a diagram illustrating a maintained state in which the objects (the bag-shaped members) are maintained in an inflated state or in a deflated state in the second embodiment.

### DETAILED DESCRIPTION OF EMBODIMENTS

Selected embodiments will now be explained with reference to the drawings. It will be apparent to those skilled in the art from the present invention that the following descriptions of the embodiments are provided for illustration only and not for the purpose of limiting the invention as defined by the appended claims.

### FIRST EMBODIMENT

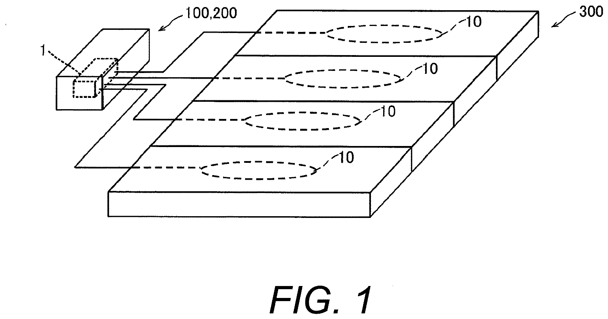

First, with reference to FIG. 1, the configuration of an air supply device 100 according to a first embodiment will be described.

As shown in FIG. 1, the air supply device 100 according to the first embodiment is a device for supplying air to an article 300. Specifically, the air supply device 100 is a device for inflating at least one bag-shaped member 10 (e.g., a plurality of bag-shaped members 10 in FIG. 1) within the article 300 by supplying air to the bag-shaped members 10, and for deflating the bag-shaped members 10 by discharging air from the bag-shaped members 10. The article 300 is, for example, an air mattress, a massage chair, or the like. The bag-shaped members 10 are examples of "objects" of the present invention.

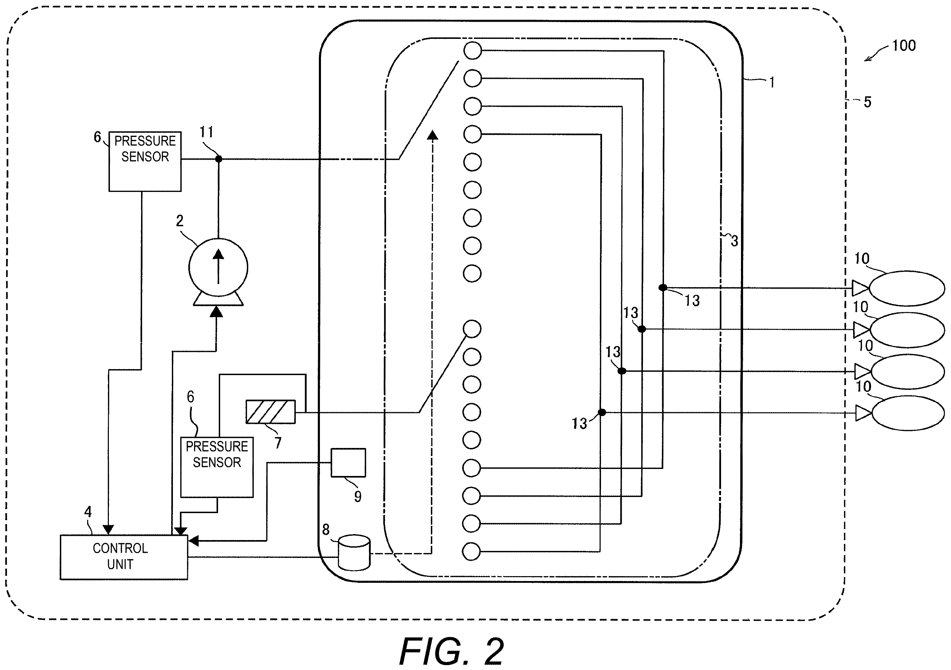

As shown in FIG. 2, the air supply device 100 comprises an enclosure 1, a pump 2, and a flow path switching unit 3. In the illustrated embodiment, the air supply device 100 comprises a control unit or controller4, a main body 5, at least one pressure sensor 6 (e.g., a plurality of pressure sensors 6 in FIG. 2), and a drive unit or driver 8.

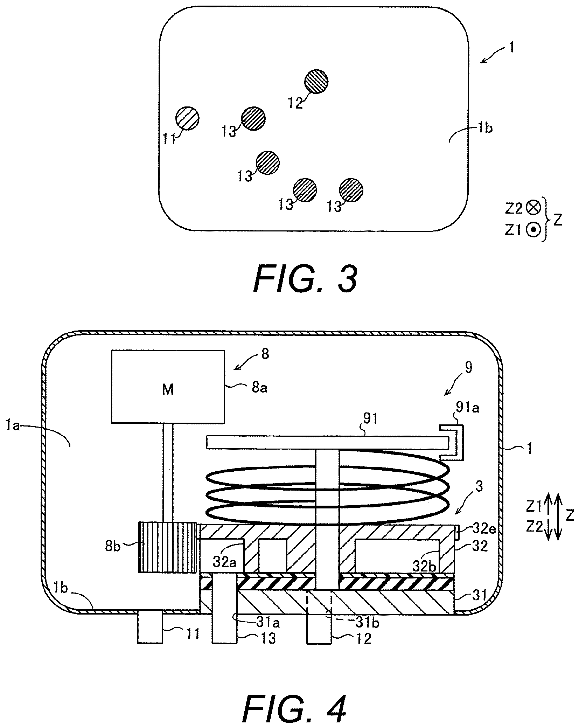

The enclosure 1 made of a resin. The enclosure 1 is, for example, a box of a rectangular or cubic shape. The enclosure 1 has a sealed interior space 1a (see FIG. 4). The flow path switching unit 3 is mounted inside the enclosure 1. The enclosure 1 is arranged inside the main body 5.

The enclosure 1 enables air to be stored in the interior space 1a (see FIG. 4) and has the function of a buffer tank. The buffer tank is a tank whose volume is set to be larger than an inlet to which a pipe is connected. The buffer tank is a tank to reduce fluctuation of air pressure in the buffer tank by the larger volume and to suppress pulsation of outlet pressure.

As shown in FIGS. 3 and 4, with the enclosure 1, the flow path switching unit 3 is mounted on a bottom 1b. The bottom 1b of the enclosure 1 is provided with an air supply port 11, an air discharge port 12, and at least one object connection port 13 (e.g., a plurality of object connection ports 13 in FIG. 3).

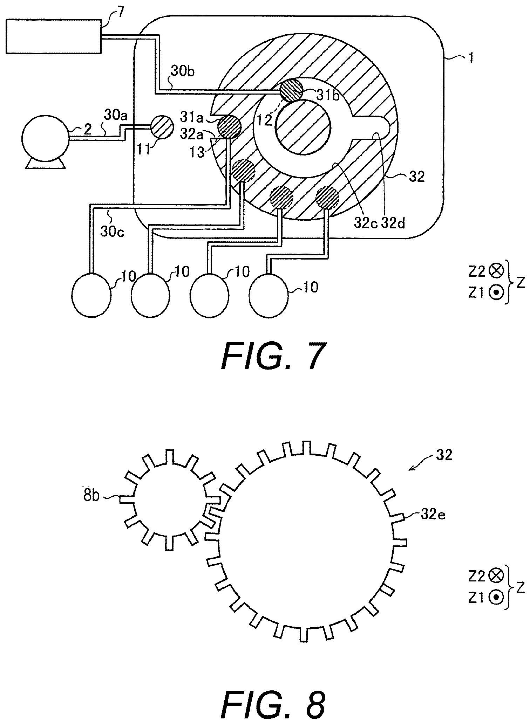

The air supply port 11 is a hole for supplying air from the pump 2 into the interior space 1a of the enclosure 1. A first pipe 30a is connected to the air supply port 11 so as not to form a gap to communicate an air outlet port of the pump 2 and the air supply port 11 (see FIG. 7). One air supply port 11 is provided in the enclosure 1.

The air discharge port 12 is a hole for discharging air. A second pipe 30b is connected to the air discharge port 12 so as not to form a gap to discharge air outside the enclosure 1 without using the pump 2 (natural exhaust) (see FIG. 7). One air discharge port 12 is provided in the enclosure 1. A silencer 7 (see FIG. 2) is attached to one end of the second pipe 30b that opens to the outside. The silencer 7 is, for example, a cover member made of urethane. The silencer 7 is a device for muffling sound when exhausting air from the air discharge port 12.

The object connection ports 13 are holes for supplying air to the bag-shaped members 10 or exhausting air from the bag-shaped members 10. Third pipes 30c are connected to the object connection ports 13, respectively, so as not to form a gap to communicate the bag-shaped members 10 and the object connection ports 13 (see FIG. 7). The number of the object connection ports 13 may be the same or different from the number of the bag-shaped members 10. In the first embodiment, four object connection ports 13 and four bag-shaped members 10 are provided, respectively.

As shown in FIG. 2, the pump 2 is provided inside the main body 5. The pump 2 is also provided outside the enclosure 1. The pump 2 is configured to supply air to the interior space 1a (see FIG. 4) of the enclosure 1. The pump 2 is a driving source for distributing air in the air supply device 100. In the illustrated embodiment, the pump 2 is an electric air pump, for example. The pump 2 is stopped when rotating a rotating part 32 of the flow path switching unit 3, as described below.

As shown in FIG. 4, the flow path switching unit 3 has a pedestal part or pedestal 31 and the rotating part or rotor 32. The flow path switching unit 3 is configured to switch flow paths for supplying air to the bag-shaped members 10 (see FIG. 2) and flow paths for exhausting air from the bag-shaped members 10. The flow path switching unit 3 is also configured to switch or select a bag-shaped member 10 for exhausting or supplying air from among the bag-shaped members 10. In the vertical direction of the enclosure 1, the top side is referred to as Z1 and the bottom 1b side is referred to as Z2.

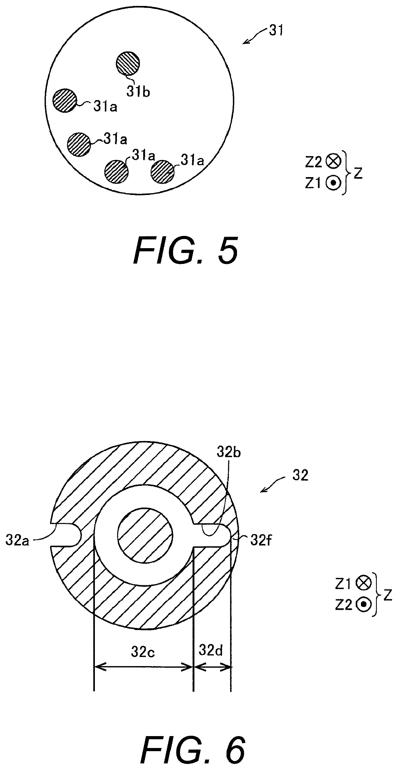

As shown in FIGS. 4 and 5, the pedestal part 31 is mounted inside the enclosure 1. When viewed from the Z1 side to the Z2 side, the pedestal part 31 has a circular shape. The pedestal part 31 is made of resin. The pedestal part 31 is mounted inside the enclosure 1 so as to cover the air discharge port 12 and the object connection ports 13. The pedestal part 31 includes at least one first hole 31a (e.g., a plurality of first holes 31a in FIG. 5) and a second hole 31b.

When viewed from the Z1 side to the Z2 side, the first holes 31a are provided at the same positions as the object connection ports 13 (see FIG. 3) provided in the enclosure 1. The first holes 31a (the object connection ports 13) are circumferentially arranged along an outer portion of the pedestal part 31 at a predetermined interval. The first holes 31a (the object connection ports 13) are arranged at a predetermined distance from a rotational center of the rotating part 32. In the first embodiment, four first holes 31a (four object connection ports 13) are provided.

When viewed from the Z1 side to the Z2 side, the second hole 31b is provided at the same position as the air discharge port 12 (see FIG. 3) provided in the enclosure 1. The second hole 31b (the air discharge port 12) is provided on an inner side closer to the center than the first holes 31a.

As shown in FIG. 6, the rotating part 32 is mounted so as to cover an upper surface of the pedestal part 31 (see FIG. 4). The rotating part 32 is rotatably mounted on the pedestal part 31. A lower surface of the rotating part 32 is in contact with the upper surface of the pedestal part 31. Specifically, the lower surface of the rotating part 32 airtightly contacts with the upper surface of the pedestal part 31 such that air does not flow between the lower surface of the rotating part 32 and the upper surface of the pedestal part 31. The rotating part 32 rotates while the lower surface remains in contact with the upper surface of the pedestal part 31.

The rotating part 32 is made of resin. The rotating part 32 has a circular shape when viewed from the Z2 side to the Z1 side. The rotating part 32 approximately has the same size as the pedestal part 31. The rotating part 32 switches between an air exhaust state, an air supply state, and a maintained state by rotation. The maintained state is a state in which air supply and exhaust is stopped and an inflated state or a deflated state of the bag-shaped members 10 is maintained. The direction of rotation when switching between the air exhaust state, the air supply state, and the maintained state may be the same or different. The rotating part 32 has an enclosure interior space communication portion 32a and a groove portion 32b. The enclosure interior space communication portion 32a and the groove portion 32b open toward the pedestal part 31 (the Z2 side), respectively, and form an air flow path. Specifically, the first holes 31a and the second hole 31b provided in the pedestal part 31 and the enclosure interior space communication portion 32a and the groove portion 32b of the rotating part 32 form a flow path. The portion of the rotating part 32 forming the enclosure interior space communication portion 32a and the groove portion 32b is hereinafter referred to as a wall portion 32f.

The enclosure interior space communication portion 32a is provided on an outer portion of the rotating part 32. The enclosure interior space communication portion 32a is communicated to the air supply port 11 through the interior space 1a of the enclosure 11. Specifically, the enclosure interior space communication portion 32a opens toward the pedestal part 31 and the enclosure 1 (see FIG. 4) so as to be communicated to the air supply port 11 through the interior space 1a of the enclosure 1. The enclosure interior space communication portion 32a opens in an outer surface (an outer circumferential surface) of the rotating part 32. The enclosure interior space communication portion 32a has an elliptical shape that is inwardly depressed when viewed from the Z1 side to the Z2 side. In the illustrated embodiment, the enclosure interior space communication portion 32a is formed by a notch, but can be formed by a through hole.

As shown in FIG. 7, the enclosure interior space communication portion 32a is disposed on the outer portion of the rotating part 32 so as to be communicated to the first holes 31a. When supplying air, the enclosure interior space communication portion 32a rotates so that a portion of the enclosure interior space communication portion 32a that opens toward the pedestal part 31 (the Z2 side) is communicated to one of the first holes 31a provided in the pedestal part 31, and a flow path is formed between the first hole 31a and the air supply port 11. The rotating part 32 selectively communicates one of the first holes 31a to the enclosure interior space communication portion 32a depending on the rotational position.

When exhausting air, the rotating part 32 rotates so that the portion of the enclosure interior space communication portion 32a that opens toward the pedestal part 31 (the Z2 side) is not communicated to any one of the first holes 31a and the second hole 31b. On the other hand, a portion of the groove portion 32b of the rotating part 32 that opens toward the pedestal part 31 (the Z2 side) is communicated to the first hole 31a and the second hole 31b provided in the pedestal part 31 to form a flow path. With this configuration, a flow path is formed between the first hole 31a and the second hole 31b to discharge air from the bag-shaped member 10 to the outside. The rotating part 32 selectively communicates one of the first holes 31a to the groove portion 32b depending on the rotational position.

During the maintained state, the rotating part 32 rotates so that the portion of the enclosure interior space communication portion 32a that opens toward the pedestal part 31 (the Z2 side) is not communicated to the first holes 31a provided in the pedestal part 31. In other words, the first holes 31a are blocked and air is not supplied to the bag-shaped members 10 nor exhausted from the bag-shaped members 10.

As shown in FIG. 6, the groove portion 32b is provided on the inner portion of the rotating part 32. The groove portion 32b is separated from the enclosure interior space communication portion 32a. The groove portion 32b is not communicated to the enclosure interior space communication portion 32a. The groove portion 32b does not open, except for in a surface on the Z2 side, and does not open in the outer circumferential surface since it is surrounded by the wall portion 32f. The groove portion 32b has a circular portion 32c and a protruding portion 32d. In particular, the groove portion 32b has the circular portion 32c and the protruding portion 32d that is communicated to the circular portion 32c and outwardly protrudes from the circular portion 32c. The protruding portion 32d is located opposite to the enclosure interior space communication portion 32a with respect to a rotational center of the rotating part 32.

As shown in FIG. 7, the circular portion 32c can be communicated to the second hole 31b. On the other hand, when supplying air, the protruding portion 32d rotates so as not to be communicated to the first holes 31a. Therefore, when supplying air, the first holes 31a are not communicated to the second hole 31b. As a result, it is possible to prevent that the supplied air is discharged to the outside.

When exhausting air, the protruding portion 32d rotates so as to be communicated to the first hole 31a. As a result, the first hole 31a and the second hole 31b are communicated. The rotating part 32 selectively communicates one of the first holes 31a to the second hole 31b depending on the rotational position.

In the maintained state, the protruding portion 32d rotates so as not to be communicated to the first holes 31a. Thereby, the first holes 31a are blocked by the wall portion 32f, and the first holes 31a are not communicated to the second hole 31b. As a result, air is neither supplied to nor exhausted from the bag-shaped members 10.

As shown in FIG. 8, the rotating part 32 includes a gear portion 32e formed on the outer circumferential surface of the rotating part 32. The gear portion 32e engages with a gear 8b of the drive unit 8 (see FIG. 4), as described later. The gear portion 32e has a larger diameter and a larger number of teeth than the gear 8b.

As shown in FIG. 4, the drive unit 8 is configured to switch the flow path switching unit 3. The drive unit 8 is provided with a motor 8a and the gear 8b. The drive unit 8 may comprise a geared motor. The drive unit 8 rotates the gear 8b by the motor 8a to rotate the rotating part 32. Specifically, the rotating part 32 rotates in a state in which the gear 8b and the gear portion 32e are engaged with each other. Thereby, the number of teeth slows down the rotation speed and the gear portion 32e functions as a reduction gear. In the first embodiment, the motor 8a is provided inside the enclosure 1, but the motor 8a can also be provided outside the enclosure 1. When the motor 8a is provided outside the enclosure 1, a sealing member may be added to a gap between the enclosure 1 and a rotation shaft of the motor 8a to minimize air leakage from the gap between the rotation shaft and the enclosure 1.

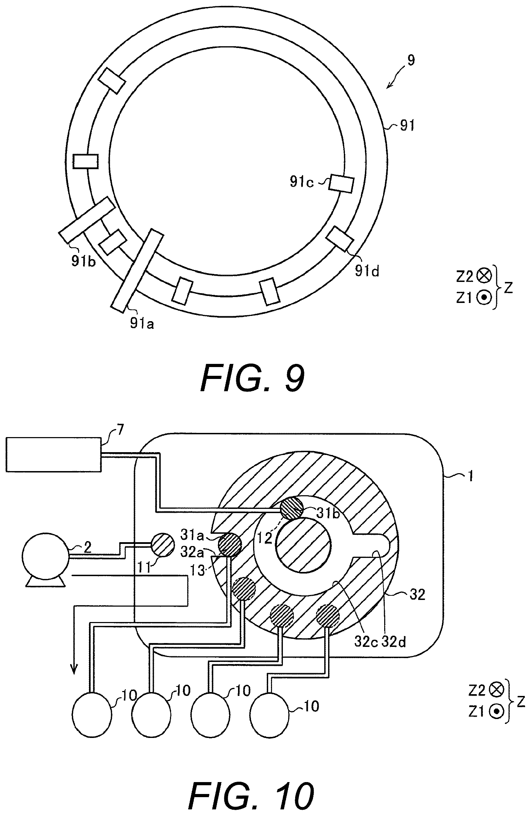

As shown in FIGS. 4 and 9, the air supply device 100 includes a phase detection unit or phase detector 9. The phase detection unit 9 is, for example, a detector plate 91 including an encoder with slits formed at a predetermined interval. With the detector plate 91, a first detection portion 91a and a second detection portion 91b are attached. The first detection portion 91a and the second detection portion 91b each have a light emitter and a detector, respectively. The detector plate 91 also has a first slit 91c indicating an initial position, and second slits 91d at each predetermined angle. The second slits 91d are provided corresponding to the first holes 31a of the pedestal part 31 and positions of the maintained state. In the first embodiment, a total of six second slits 91d, four corresponding to the four first holes 31a and two for maintained state positions, are provided at equal intervals (e.g., every 36 degrees). Here, slits are not provided at symmetrical positions of the detector plate 91 relative to the positions of the first holes 31a with respect to the center. The initial position is detected by the first detection portion 91a detecting, by the detector, the light from the light emitter passing through the first slit 91c. Also, a rotational angle is detected by the number of times the second detection portion 91b detects the light passing through the second slits 91d. Depending on the positions of the slits of the encoder, the air supply state, the air exhaust state, and the maintained state can be switched. Here, the phase detection unit 9 may be attached to the flow path switching unit 3 or may be away from the flow path switching unit 3. The phase detection unit 9 may be configured by, for example, a sensor including a detection circuit, as long as it is capable of acquiring a phase change (degree of rotation) of the rotating part 32 of the flow path switching unit 3.

As shown in FIG. 2, the control unit 4 is configured to control the pump 2 and the rotating part 32. The control unit 4 is configured to control the pump 2 and the rotating part 32 by receiving an external input. The control unit 4 is configured to supply air to the bag-shaped members 10 or exhaust air from the bag-shaped members 10. The control unit 4 is also configured to stop rotation of the rotating part 32 based on detection result by the detector plate 91. The control unit 4 is also configured to stop driving of the pump 2 based on the air pressure of the interior space 1a of the enclosure 1 measured by the pressure sensors 6 and to switch from the air supply state or the air exhaust state to the maintained state by rotating the rotating part 32. The control unit 4 is also configured to switch the bag-shaped members 10 for supplying and exhausting air according to an external input. In the illustrated embodiment, the control unit or controller 4 includes a processor or electrical controller which is a hardware device capable of executing a software program, and does not include a human. In the illustrated embodiment, the control unit 4 includes a CPU. However, in some cases, the control unit 4 can be configured to comprise, instead of the CPU or in addition to the CPU, programmable logic devices such as a DSP (Digital Signal Processing or Processor), an FPGA (Field Programmable Gate Array), and the like. In addition, the control unit 4 can include a plurality of processors or CPUs that execute the processing sequences of the present disclosure together. In the illustrated embodiment, the control unit 4 is electrically or operatively connected to the pump 2, and is configured to control the pump 2. The control unit 4 is electrically or operatively connected to the pressure sensors 6, and is configured to control the pump 2 or the drive unit 8 based on the detection results of the pressure sensors 6. The control unit 4 is electrically or operatively connected to the drive unit 8, and is configured to control the drive unit 8 to rotate the rotating part 32. The control unit 4 is electrically or operatively connected to the phase detection unit 9, and is configured to control the pump 2 or the drive unit 8 based on the detection result of the phase detection unit 9.

The enclosure 1, the pump 2, the control unit 4, and the pressure sensors 6 are arranged inside the main body. The main body 5 is, for example, a box made of resin. The main body 5 is also provided with a power supply (not shown) for driving the pump 2 and the flow path switching unit 3. Also, the power supply supplies electric power to the control unit 4, the pressure sensors 6 and the phase detection unit 9, as needed and/or desired.

The pressure sensors 6 measure the pressure of air supplied to the interior space 1a of the enclosure 1 or exhausted from the interior space 1a of the enclosure 1. The pressure sensors 6 are provided to the first pipe 30a (see FIG. 7) connected between the air supply port 11 and the pump 2 and to the second pipe 30b (see FIG. 7) connected between the air discharge port 12 and the silencer 7. When the pressure sensor 6 on the first pipe 30a detects a pressure equal to or higher than a predetermined value, the control unit 4 is configured to stop the pump 2. Also, when the pressure sensor 6 on the second pipe 30b detects a pressure below a predetermined value, the control unit 4 is configured to stop the pump 2. The predetermined values of the two pressure sensors 6 are different, and for example, the predetermined value for the pressure sensor 6 on the first pipe 30a is a positive value and the predetermined value for the pressure sensor 6 on the second pipe 30b is 0 or a negative value.

### (Arrangement of Rotating Part When Supplying Air)

The arrangement of the rotating part 32 when supplying air will be described based on FIG. 10. When supplying air to one of the bag-shaped members 10, the enclosure interior space communication portion 32a is arranged at a position to be communicated to corresponding one of the object connection ports 13 via corresponding one of the first holes 31a. Also, the circular portion 32c of the groove portion 32b is communicated to the air discharge port 12 via the second hole 31b. The protruding portion 32d of the groove portion 32b is not communicated to the first holes 31a and the second hole 31b. Thus, the corresponding one of the first holes 31a is located in the enclosure interior space communication portion 32a when supplying air to the one of the bag-shaped members 10. In particular, the corresponding one of the first holes 31a is located in the enclosure interior space communication portion 32a and the second hole 31b is located in the circular portion 32c when supplying air to the one of the bag-shaped members 10.

The air drawn into the pump 2 is supplied from the pump 2 to the interior space 1a of the enclosure 1 through the air supply port 11. The air supplied to the interior space 1a of the enclosure 1 is supplied to the first hole 31a (the object connection port 13) through the enclosure interior space communication portion 32a. With this configuration, the air can be supplied to the bag-shaped member 10.

### (Arrangement of Rotating Part When Exhausting Air)

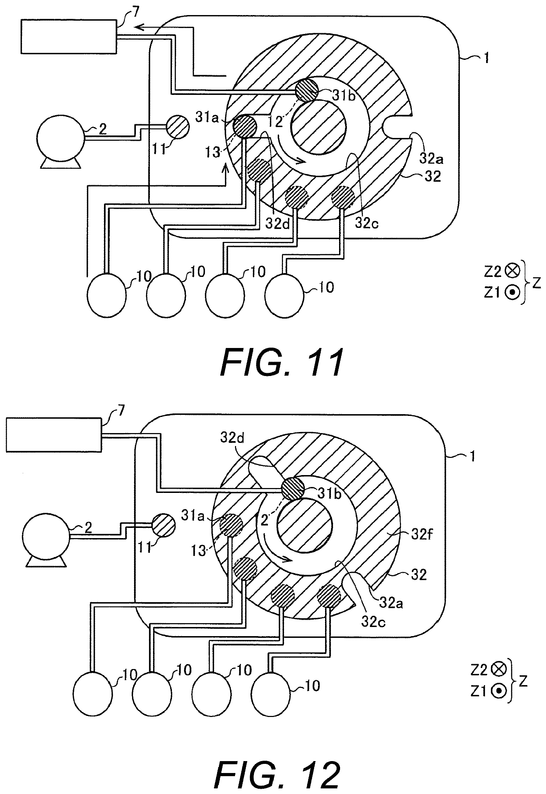

The arrangement of the rotating part 32 when exhausting air will be described based on FIG. 11. When exhausting air from one of the bag-shaped members 10, the groove portion 32b is arranged at a position where the circular portion 32c is communicated to the air discharge port 12 via the second hole 31b and the protruding portion 32d is communicated to corresponding one of the object connection ports 13 via corresponding one of the first holes 31a. Thus, the corresponding one of the first holes 31a and the second hole 31b are located in the groove portion 32b when exhausting air from the one of the bag-shaped members 10. In particular, the corresponding one of the first holes 31a is located in the protruding portion 32d and the second hole 31b is located in the circular portion 32c when exhausting air from the one of the bag-shaped members 10. With this configuration, air flows from the bag-shaped member 10 to the object connection port 13. Then, the air flows from the object connection port 13 to the groove portion 32b. The air flowing into the groove portion 32b is then discharged to the outside by the air discharge port 12. The enclosure interior space communication portion 32a is not communicated to the first holes 31a and the second hole 31b. Even if the pump 2 is driven while exhausting air, the air is stored inside the enclosure 1 and is not supplied to the bag-shaped member 10. Thus, the pump 2 can be driven while exhausting air. However, to reduce the power consumption, the drive of the pump 2 may be stopped while exhausting air.

### (Arrangement of Rotating Part In Maintained State)

As shown in FIG. 12, in the maintained state of the inflated or deflated state of the bag-shaped members 10 for which supplying and exhausting air is stopped, the enclosure interior space communication portion 32a is not communicated to the first holes 31a. In addition, with the groove portion 32b, the circular portion 32c is communicated to the second hole 31b, but the groove portion 32b (the circular portion 32c and the protruding portion 32d) is not communicated to the first holes 31a. Thus, the first holes 31a are blocked by the rotating part 32 when maintaining the inflated state or the deflated state of the bag-shaped members 10. Therefore, a flow path between the first holes 31a and the second hole 31b is not formed. With this configuration, air is neither supplied to the bag-shaped members 10 nor discharged from the bag-shaped members 10, and the bag-shaped members 10 can maintain the inflated state or the deflated state.

### (Control When Supplying Air)

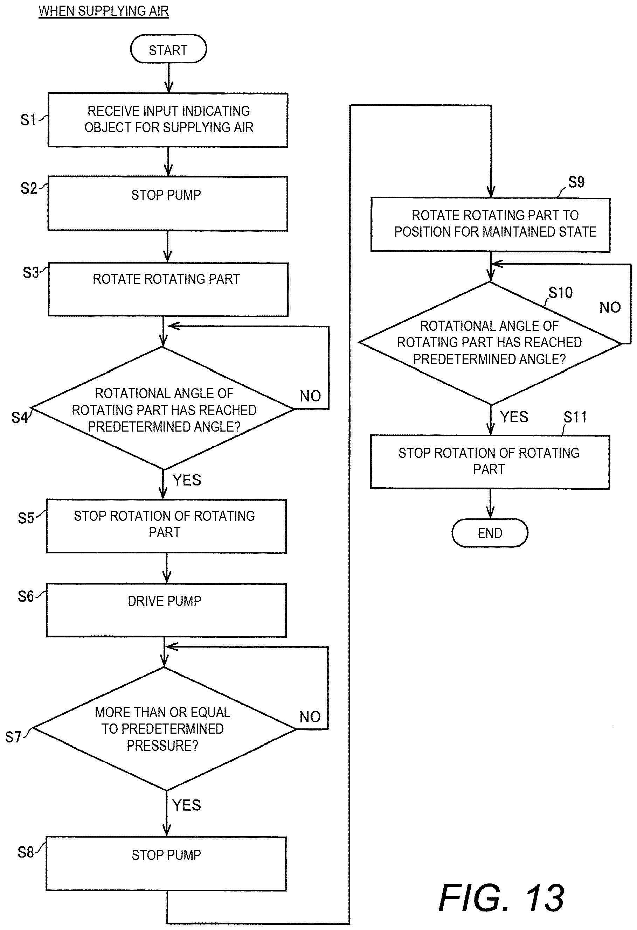

The control of the control unit 4 when supplying air will be described based on FIG. 13. First, as step S1, the control unit 4 receives an input indicating a bag-shaped member 10 as an object or target for supplying air. The input is, for example, an input by a remote controller or an operation button.

In step S2, the control unit 4 stops the pump 2. In step S3, the control unit 4 controls the drive unit 8 to rotate the rotating part 32 at a predetermined angle or at a predetermined interval by driving the motor 8a of the drive unit 8. The predetermined angle of the rotating part 32 is set in accordance with the interval at which the first holes 31a are arranged by using a position at which the first detection portion 91a and the second detection portion 91b both detect light as the initial position (i.e., 0 degrees). The initial position is also a position in which air supply and exhaust to all the bag-shaped members 10 are also stopped. When the rotating part 32 is located at the initial position, the control unit 4 rotates the rotating part 32 to the predetermined angle. Specifically, the control unit 4 rotates the rotating part 32 until the second detection portion 91b detects light a predetermined number of times corresponding to the predetermined angle. When the rotating part 32 has been rotated from the initial position (e.g., when air is being supplied to other bag-shaped member 10), the control unit 4 rotates the rotating part 32 by an angular difference obtained by subtracting a rotational angle that has already been rotated from an angle between the initial position and a position corresponding to the target bag-shaped member 10. Specifically, the control unit 4 controls the drive unit 8 to rotate the rotating part 32 until the second detection portion 91b detects light a predetermined number of times corresponding to the angular difference.

In step S4, the control unit 4 performs the next control differently depending on whether the rotational angle of the rotating part 32 is the predetermined angle or not. Specifically, the control unit 4 acquires the detection result detected by the detector plate 91, and if the rotational angle of the rotating part 32 is the predetermined angle, or in other words, if the second detection portion 91b detects light the predetermined number of times, then it proceeds to step S5. On the other hand, if the second detection portion 91b has not detected light the predetermined number of times, then step S4 is repeated until the predetermined angle is reached (until light is detected the predetermined number of times).

In step S5, the control unit 4 stops the motor 8a of the drive unit 8 to stop the rotation of the rotating part 32.

In step S6, the control unit 4 drives the pump 2 to supply air to the bag-shaped member 10. In step S7, the control unit 4 changes the control depending on whether or not the pressure detected by the pressure sensor 6 provided to the first pipe 30a is more than or equal to the predetermined value. If it is more than or equal to the predetermined value, then it proceeds to step S8 and the control unit 4 stops the pump 2. If it is less than the predetermined value, then step S7 is repeated until it becomes more than or equal to the predetermined value.

After stopping the pump 2 in step S8, in step S9, the control unit 4 controls the drive unit 8 to rotate the rotating part 32 to the position for the maintained state. In step S10, the control unit 4 performs the next control differently depending on whether the rotational angle of the rotating part 32 is the predetermined angle or not. Specifically, the control unit 4 acquires the detection result detected by the detector plate 91, and if the rotational angle of the rotating part 32 is the predetermined angle, then it proceeds to step S 11. A case in which the rotational angle of the rotating part 32 is the predetermined angle means a case in which the second detection portion 91b detects light the predetermined number of times. On the other hand, if the second detection portion 91b has not detected light the predetermined number of times, then step S10 is repeated until the predetermined angle is reached (until light is detected the predetermined number of times). In step S11, the control unit 4 stops the motor 8a of the drive unit 8 to stop the rotation of the rotating part 32. With this configuration, the bag-shaped member 10 can maintain the inflated state.

### (Control When Exhausting Air)

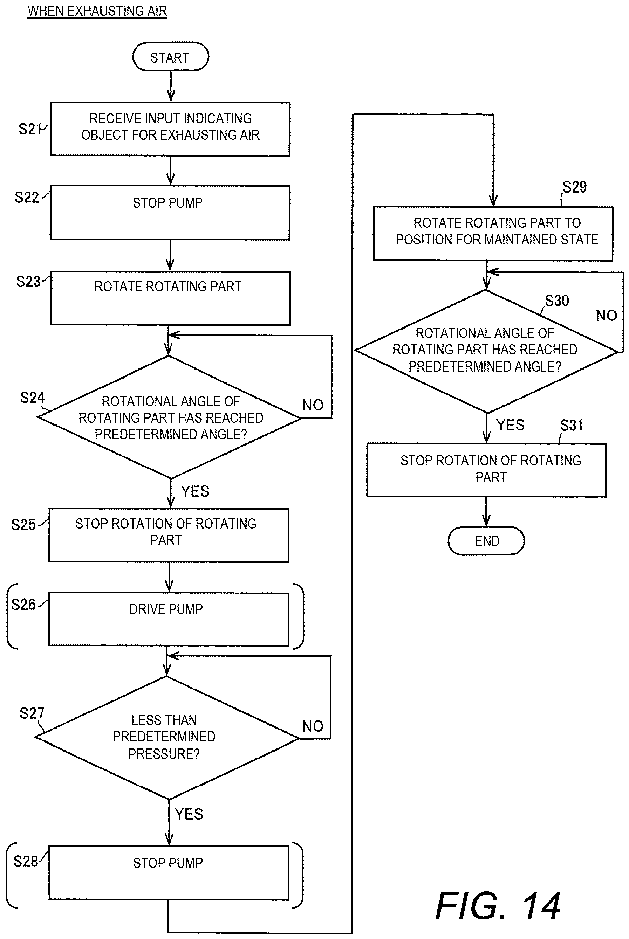

The control of the control unit 4 when exhausting air will be described based on FIG. 14. First, as step S21, the control unit 4 receives an input indicating a bag-shaped member 10 as an object or target for exhausting air.

In step S22, the control unit 4 stops the pump 2. In step S23, the control unit 4 controls the drive unit 8 to rotate the rotating part 32 at a predetermined angle or at a predetermined interval by driving the motor 8a of the drive unit 8. The predetermined angle of the rotating part 32 is set in accordance with the interval at which the first holes 31a are arranged by using a position at which the first detection portion 91a and the second detection portion 91b both detect light as the initial position (i.e., 0 degrees). The initial position is also a position in which air supply and exhaust to all the bag-shaped members 10 are also stopped. When the rotating part 32 is located at the initial position, the control unit 4 rotates the rotating part 32 to the predetermined angle. Specifically, the control unit 4 rotates the rotating part 32 until the second detection portion 91b detects light a predetermined number of times corresponding to the predetermined angle. When the rotating part 32 has been rotated from the initial position (e.g., when air is being exhausted from other bag-shaped member 10), the control unit 4 rotates the rotating part 32 by an angular difference obtained by subtracting a rotational angle that has already been rotated from an angle between the initial position and a position corresponding to the target bag-shaped member 10. Specifically, the control unit 4 controls the drive unit 8 to rotate the rotating part 32 until the second detection portion 91b detects light a predetermined number of times corresponding to the angular difference.

In step S24, the control unit 4 performs the next control differently depending on whether the rotational angle of the rotating part 32 is the predetermined angle or not. Specifically, the control unit 4 acquires the detection result detected by the detector plate 91, and if the rotational angle of the rotating part 32 is the predetermined angle, or in other words, if the second detection portion 91b detects light the predetermined number of times, then it proceeds to step S25. On the other hand, if the second detection portion 91b has not detected light the predetermined number of times, then step S24 is repeated until the predetermined angle is reached (until light is detected the predetermined number of times).

In step S25, the control unit 4 stops the motor 8a of the drive unit 8 to stop the rotation of the rotating part 32.

In step S27, the control unit 4 changes the control depending on whether or not the pressure detected by the pressure sensor 6 provided to the second pipe 30b is less than the predetermined value. If it is less than the predetermined value, then it proceeds to step S29. If it is more than or equal to the predetermined value, then step S27 is repeated until it becomes less than the predetermined value. In the illustrated embodiment, the drive of the pump 2 in step S26 and the stop of the pump 2 in step S28 shown in FIG. 14 will not be performed. However, the drive of the pump 2 in step S26 and the stop of the pump 2 in step S28 shown in FIG. 14 will be performed by the configuration according to a second embodiment, as described later.

In step S29, the control unit 4 controls the drive unit 8 to rotate the rotating part 32 to the position for the maintained state. In step S30, the control unit 4 performs the next control differently depending on whether the rotational angle of the rotating part 32 is the predetermined angle or not. Specifically, the control unit 4 acquires the detection result detected by the detector plate 91, and if the rotational angle of the rotating part 32 is the predetermined angle, or in other words, if the second detection portion 91b detects light the predetermined number of times, then it proceeds to step S31. On the other hand, if the second detection portion 91b has not detected light the predetermined number of times, then step S30 is repeated until the predetermined angle is reached (until the second detection portion 91b detects light the predetermined number of times). In step S31, the control unit 4 stops the motor 8a of the drive unit 8 to stop the rotation of the rotating part 32. With this configuration, the bag-shaped member 10 can maintain the deflated state.

### (Effects of First Embodiment)

In the first embodiment, the following effects can be obtained.

In the first embodiment, as described above, the air supply device 100 comprises the enclosure 1, the pump 2, and the flow path switching unit 3. The enclosure 1 has the sealed interior space 1a for storing air therein. The pump 2 is provided outside the enclosure 1. The pump 2 is configured to supply air to the interior space 1a of the enclosure 1. The flow path switching unit 3 includes the pedestal part 31 mounted inside the enclosure 1, the rotating part 32 rotatably mounted on the pedestal part 31, the rotating part 32 having the enclosure interior space communication portion 32a and the groove portion 32b, and the drive unit 8 configured to rotate the rotating part 32. The enclosure 1 includes the air supply port 11 for supplying air supplied from the pump 2 to the interior space 1a of the enclosure 1, the air discharge port 12 for discharging air from the groove portion 32b of the rotating part 32, and the object connection ports 13 for supplying air to or exhausting air from the bag-shaped members 10. The pedestal part 31 includes the first holes 31a that are communicated to the object connection ports 13, and the second hole 31b that is communicated to the air discharge port 12. The enclosure interior space communication portion 32a is communicated to the air supply port 11 through the interior space 1a of the enclosure 1. The groove portion 32b is separated from the enclosure interior space communication portion 32a.

The enclosure interior space communication portion 32a includes a notch or a through hole that is provided on the outer portion of the rotating part 32. The notch or the through hole opens toward the pedestal part 31 and the enclosure 1 so as to be communicated to the air supply port 11 through the interior space 1a of the enclosure 1. The groove portion 32b opens toward the pedestal part 31 so as not to be directly communicated to the enclosure interior space communication portion 32a.

With this configuration, the rotating part 32 includes the enclosure interior space communication portion 32a on the outer portion of the rotating part 32. Therefore, the sealed interior space 1a of the enclosure 1 can be used as a flow path for supplying air or exhausting air, and thus there is no need to provide a groove for forming a flow path in an outer circumference of the rotating part 32. With this configuration, enlargement of the flow path switching unit 3 can be suppressed. As a result, enlargement of the air supply device 100 can be suppressed.

In the first embodiment, as described above, the air supply device further comprises the control unit 4 configured to control the drive unit 8 to rotate the rotating part 32 to the position at which the position of one of the first holes 31a and the position of the enclosure interior space communication portion 32a coincide to each other when supplying air to one of the bag-shaped members 10, and the control unit 4 being configured to control the drive unit 8 to rotate the rotating part 32 to the position at which the one of the first holes 31a and the second hole 31b are communicated to each other through the groove portion 32b when exhausting air from the one of the bag-shaped members 10. With this configuration, when supplying air to the one of the bag-shaped members 10, the enclosure interior space communication portion 32a and the one of the first holes 31a are communicated to each other and a flow path is formed from the interior space 1a of the enclosure 1 to the one of the bag-shaped members 10. Thus, air inside the enclosure 1 can be supplied to the one of the bag-shaped members 10. Also, when exhausting air from the one of the bag-shaped members 10, the one of the first holes 31a and the second hole 31b are communicated to each other and a flow path is formed from the one of the bag-shaped members 10 to the air discharge port 12. Thus, the air can be exhausted from the one of the bag-shaped members 10.

In the first embodiment, as described above, the control unit 4 is configured to switch the bag-shaped members 10 for supplying and exhausting air by rotating the rotating part 32 at the predetermined angle or at the predetermined interval. With this configuration, switching of the bag-shaped members 10 can be easily performed by setting the predetermined angle or the predetermined interval in accordance with the positions of the first holes 31a and the second hole 31b.

In the first embodiment, as described above, the air supply device 100 further comprises the pressure sensors 6 for measuring the pressure of air supplied to the interior space 1a of the enclosure 1 and exhausted from the interior space 1a of the enclosure 1. When supplying air to the one of the bag-shaped members 10, the control unit 4 is configured to control the drive unit 8 to rotate the rotating part 32 to the position at which no flow path is formed between the first holes 31a and the second hole 31b while the pressure detected by one of the pressure sensors 6 is higher than or equal to the predetermined value. With this configuration, the control unit 4 can acquire that air has been sufficiently supplied to the one of the bag-shaped members 10 based on the fact that air pressure in the one of the bag-shaped members 10 in a full air state has become more than or equal to the predetermined value. In addition, when the pressure detected by the one of the pressure sensors 6 is more than or equal to the predetermined value, no flow path is formed between the first holes 31a and the second hole 31b. Thus, no flow path is formed from the one of the bag-shaped members 10 to the air discharge port 12, and it is possible to prevent that air is discharged from the one of the bag-shaped members 10.

In the first embodiment, as described above, when exhausting air from the one of the bag-shaped members 10, the control unit 4 is configured to control the drive unit 8 to rotate the rotating part 32 to the position at which no flow path is formed between the first holes 31a and the second hole 31b while the pressure detected by the other one of the pressure sensors 6 is less than the predetermined value. With this configuration, by setting the predetermined value to an air pressure in the one of the bag-shaped members 10 in a sufficiently exhausted state, it is possible for the control unit 4 to acquire that air has been sufficiently exhausted from the one of the bag-shaped members 10. Also, no flow path is formed between the first holes 31a and the second hole 31b while the pressure is less than the predetermined value. Thus, no flow path is formed from the one of the bag-shaped members 10 to the air discharge port 12, and it is possible to prevent that air is excessively discharged from the one of the bag-shaped members 10.

In the first embodiment, as described above, the control unit 4 is configured to stop the drive of the pump 2 when rotating the rotating part 32. With this configuration, for example, when supplying air to the one of the bag-shaped members 10 by communicating the one of the first holes 31a to the enclosure interior space communication portion 32, it is possible to prevent that air supplied to the interior space 1a of the enclosure 1 is supplied by the pump 2 to other bag-shaped member 10 by communicating other first hole 31a to the enclosure interior space communication portion 32a during rotation of the rotating part 32.

In the first embodiment, as described above, the rotating part 32 includes the gear portion 32e formed on the outer circumferential surface of the rotating part 32, and the control unit 4 is configured to control the drive unit 8 to rotate the rotating part 32 in a state in which the drive unit 8 and the gear portion 32e are engaged. With this configuration, the rotating part 32 can function as a reduction gear by varying the number of teeth between the drive unit 8 and the gear portion 32e.

In the first embodiment, as described above, when viewed from the pedestal part 31 side, the enclosure interior space communication portion 32a has an elliptical shape inwardly depressed. The groove portion 32b has the circular portion 32c that is communicated to the second hole 31b, and the protruding portion 32d that is selectively communicated to the first holes 31a and that outwardly protrudes from the circular portion 32c. With this configuration, the outer circumferences of the enclosure interior space communication portion 32a and the groove portion 32b can be aligned with the outer circumferences of the first hole 31a and the second hole 31b without misalignment. Thus, it is possible to prevent supplying air to the bag-shaped member 10 or exhausting air from the bag-shaped member 10 in a state in which the first hole 31a and the second hole 31b are partially blocked by the rotating part 32.

### SECOND EMBODIMENT

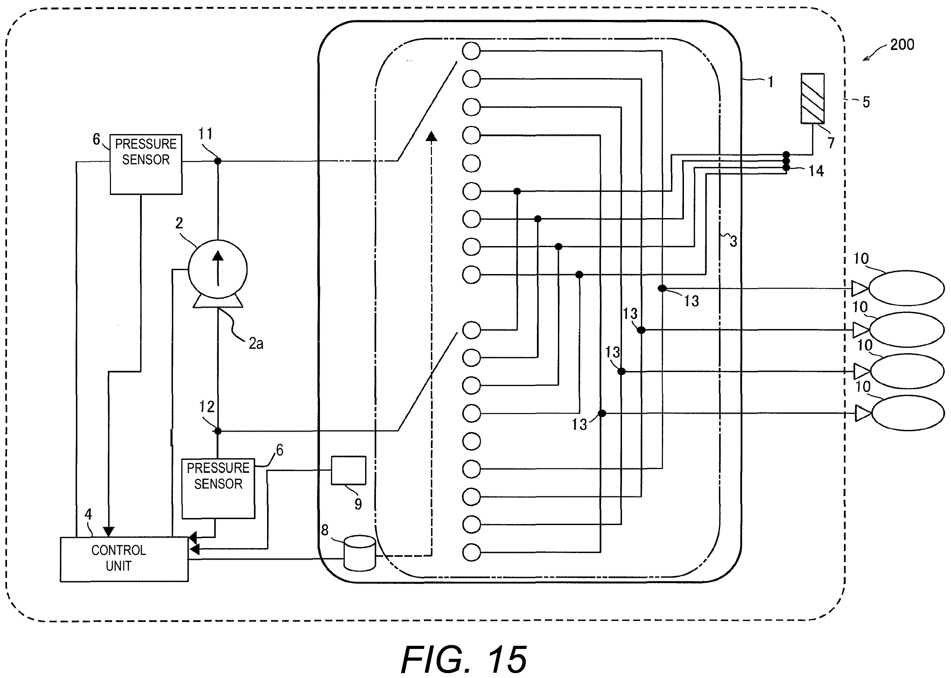

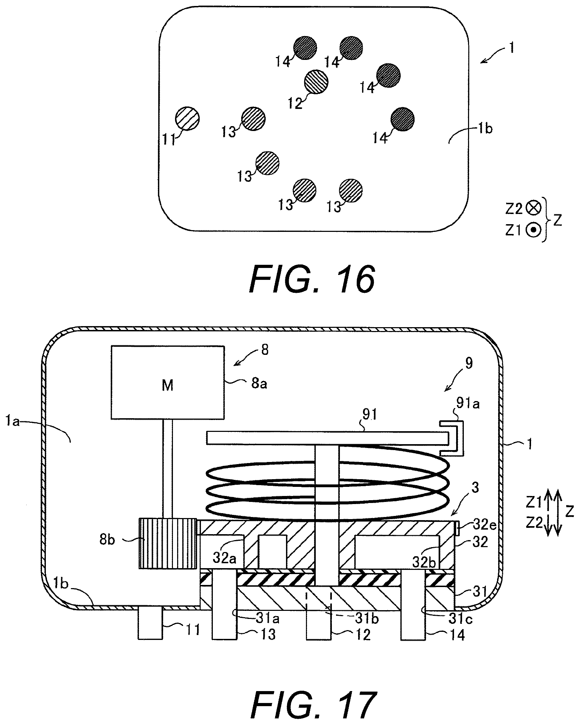

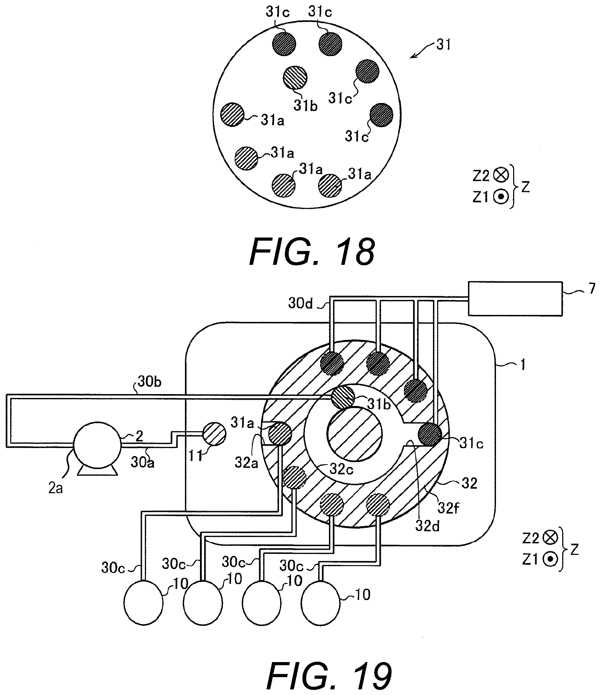

Referring to FIGS. 15 to 23, a second embodiment will be described. With an air supply device 200 in accordance with this second embodiment, unlike the first embodiment, the pedestal part 31 includes at least one third hole 31c (e.g., a plurality of third holes 31c in FIG. 18). The enclosure 1 also includes at least one external air supply and exhaust port 14 (e.g., a plurality of external air supply and exhaust ports 14 in FIG. 16). The parts of the second embodiment that are identical or substantially or functionally identical to the parts of the first embodiment will be given the same reference numerals, and the descriptions thereof will be omitted for the sake of brevity.

As shown in FIGS. 15 and 16, the bottom 1b of the enclosure 1 includes the air supply port 11, the air discharge port 12, the object connection ports 13, and the external air supply and exhaust ports 14. As also shown in FIG. 19, the second pipe 30b is connected between the air discharge port 12 and the pump 2. Specifically, the air discharge port 12 is connected to an air intake port 2a of the pump 2 via the second pipe 30b.

The external air supply and exhaust ports 14 are holes for supplying air from the outside of the enclosure 1 to the interior space 1a of the enclosure 1 or for exhausting air from the interior space 1a of the enclosure 1 to the outside of the enclosure. Fourth pipes 30d (see FIG. 19) are connected to the external air supply and exhaust ports 14 so as not to form a gap. In the illustrated embodiment, the fourth pipes 30d merge into a single pipe, one end of which opens to the outside and is connected to the silencer 7. The external air supply and exhaust ports 14 may be provided in the same number as the number of the bag-shaped members 10, or may be different. In the second embodiment, four external air supply and exhaust ports 14 are provided.

As shown in FIG. 19, one ends of the fourth pipes 30d are connected to the external air supply and exhaust ports 14. As shown in FIG. 19, the silencer 7 is connected to the one end of the single pipe, into which the fourth pipes 30d merge. The silencer 7 is a device for muffing sound when exhausting air from the external air supply and exhaust ports 14 and for muffing sound when supplying air to the external air supply and exhaust ports 14. In the illustrated embodiment, one ends of the fourth pipes 30d merge into the single pipe. However, the one ends of the fourth pipes 30d can have openings that are open to the outside and can be connected to silencers 7, respectively.

As shown in FIGS. 17 and 18, the pedestal part 31 has the first holes 31a, the second hole 31b, and the third holes 31c.

When viewed from the Z1 side to the Z2 side, the third holes 31c are provided at the same positions as the external air supply and exhaust ports 14 (see FIG. 16) provided in the enclosure 1. The third holes 31c (the external air supply and exhaust ports 14) are circumferentially arranged along an outer portion of the pedestal part 31 at a predetermined interval. The third holes 31c are arranged to be point-symmetrical with the first holes 31a with respect to the center of the pedestal part 31 (a rotational center of the rotating part 32). The third holes 31c (the external air supply and exhaust ports 14) are arranged at a predetermined distance from the rotational center of the rotating part 32. In the second embodiment, four third holes 31c (four external air supply and exhaust ports 14) are provided.

As shown in FIG. 19, the enclosure interior space communication portion 32a is disposed on the outer portion of the rotating part 32 so as to be communicated to the first holes 31a or the third holes 31c. When supplying air, the enclosure interior space communication portion 32a rotates so that a portion of the enclosure interior space communication portion 32a that opens toward the pedestal part 31 (the Z2 side) is communicated to one of the first holes 31a provided in the pedestal part 31, and a flow path is formed between the first hole 31a and the air supply port 11. When supplying air, the portion of the enclosure interior space communication portion 32a that opens toward the pedestal part 31(the Z2 side) is not directly communicated to the third holes 31c. At this time, one of the third holes 31c is located in the groove portion 32b that is separated from the enclosure interior space communication portion 32a, and other third holes 31c are blocked by the wall portion 32f of the rotating part 32. The rotating part 32 selectively communicates one of the first holes 31a to the enclosure interior space communication portion 32a depending on the rotational position.

When exhausting air, the rotating part 32 rotates so that the portion of the enclosure interior space communication portion 32a that opens toward the pedestal part 31 (the Z2 side) is communicated to one of the third holes 31c provided in the pedestal part 31, and a flow path is formed between the third hole 31c and the air supply port 11. When exhausting air, the portion of the enclosure interior space communication portion 32a that opens toward the pedestal part 31 (the Z2 side) is not directly communicated to the first holes 31a. At this time, one of the first holes 31a is located in the groove portion 32b that is separated from the enclosure interior space communication portion 32a, and other first holes 31a are blocked by the wall portion 32f of the rotating part 32. The rotating part 32 selectively communicates one of the third holes 31c to the enclosure interior space communication portion 32a depending on the rotational position.

During the maintained state, the rotating part 32 rotates so that the portion of the enclosure interior space communication portion 32a that opens toward the pedestal part 31 (the Z2 side) is not communicated to the first holes 31a and the third holes 31c provided in the pedestal part 31. The first holes 31a and the third holes 31c are blocked by the wall portion 32f, and air is neither supplied to the bag-shaped members 10 nor exhausted from the bag-shaped members 10.

As shown in FIG. 19, the circular portion 32c can be communicated to the second hole 31b. When supplying air, the protruding portion 32d rotates so as to be communicated to one of the third holes 31c. As a result, the third hole 31c and the second hole 31b are communicated. At this time, the first holes 31a are not directly communicated to the protruding portion 32d. One of the first holes 31a is located in the enclosure interior space communication portion 32a that is separated from the groove portion 32b, and other first holes 31a are blocked by the wall portion 32f. Thus, the first holes 31a and the second hole 31b are not directly communicated. The rotating part 32 selectively communicates one of the third holes 31c and the second hole 31b depending on the rotational position.

When exhausting air, the protruding portion 32d rotates so as to be communicated to one of the first holes 31a. As a result, the first hole 31a and the second hole 31b are communicated. At this time, the third holes 31c are not directly communicated to the protruding portion 32d. One of the third holes 31c is located in the enclosure interior space communication portion 32a that is separated from the groove portion 32b, and other third holes 31c are blocked by the wall portion 32f. Thus, the third holes 31c and the second hole 31b are not directly communicated. The rotating part 32 selectively communicates one of the first holes 31a and the second hole 31b depending on the rotational position.

During the maintained state, the protruding portion 32d rotates so as not to be communicated to the first holes 31a and the third holes 31c. The first holes 31a and the third holes 31c are blocked by the wall portion 32f, and the first holes 31a and the third holes 31c are not communicated to the second hole 31b. As a result, air is neither supplied to the bag-shaped members 10 nor exhausted from the bag-shaped members 10.

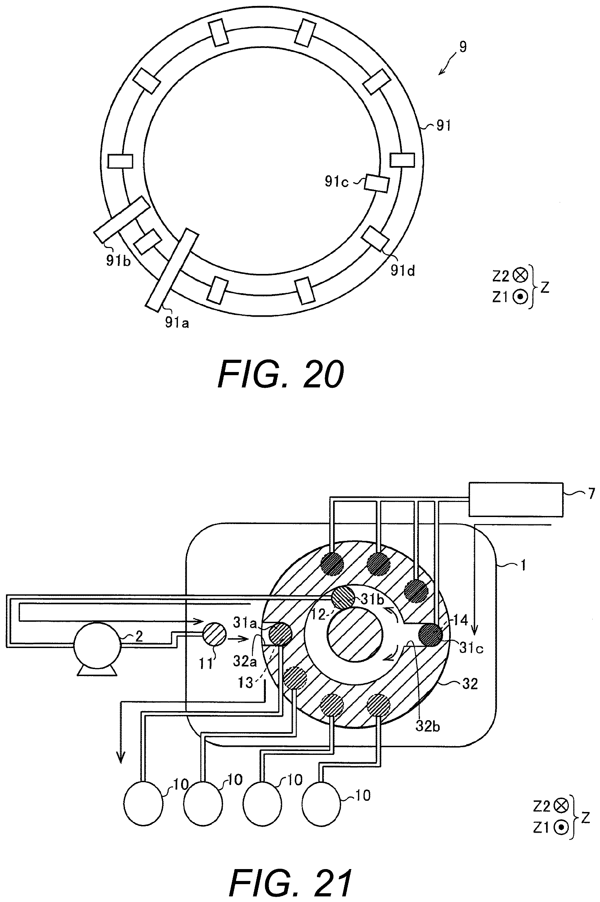

As shown in FIG. 20, in the second embodiment, a total of ten second slits 91d, four corresponding to the four first holes 31a, four corresponding to the four third holes 31c and two for maintained state positions, are provided at equal intervals (e.g., every 36 degrees). The initial position is detected by the first detection portion 91a detecting, by the detector, the light from the light emitter passing through the first slit 91c. Also, a rotational angle is detected by the number of times the second detection portion 91b detects the light passing through the second slits 91d. Depending on the positions of the slits of the encoder, the air supply state, the air exhaust state, and the maintained state can be switched.

### (Arrangement of Rotating Part When Supplying Air)

The arrangement of the rotating part 32 when supplying air will be described based on FIG. 21. When supplying air to one of the bag-shaped members 10, the enclosure interior space communication portion 32a is arranged at a position to be communicated to corresponding one of the object connection ports 13 via corresponding one of the first holes 31a. Also, the circular portion 32c of the groove portion 32b is communicated to the air discharge port 12 via the second hole 31b. The protruding portion 32d is arranged at a position to be communicated to corresponding one of the external air supply and exhaust ports 14 via corresponding one of the third holes 31c. Thus, the corresponding one of the first holes 31a is located in the enclosure interior space communication portion 32a and the second hole 31b and the corresponding one of the third holes 31c are located in the groove portion 32b when supplying air to the one of the bag-shaped members 10. In particular, the corresponding one of the first holes 31a is located in the enclosure interior space communication portion 32a, the second hole 32b is located in the circular portion 32c and the corresponding one of the third holes 31c is located in the protruding portion 32d when supplying air to the one of the bag-shaped members 10.

The air drawn from the outside by the pump 2 is supplied to the groove portion 32b through the external air supply and exhaust port 14. The air passing through the groove portion 32b is drawn into the pump 2 through the air discharge port 12. The air drawn into the pump 2 is supplied from the pump 2 to the interior space 1a of the enclosure 1 through the air supply port 11. The air supplied to the interior space 1a of the enclosure 1 is supplied to the object connection port 13 through the enclosure interior space communication portion 32a, and the air is supplied to the bag-shaped member 10.

The control of the control unit 4 when supplying air is basically identical to the control shown in FIG. 13, and thus, the detailed description of the control will be omitted for the sake of brevity.

### (Arrangement of Rotating Part When Exhausting Air)

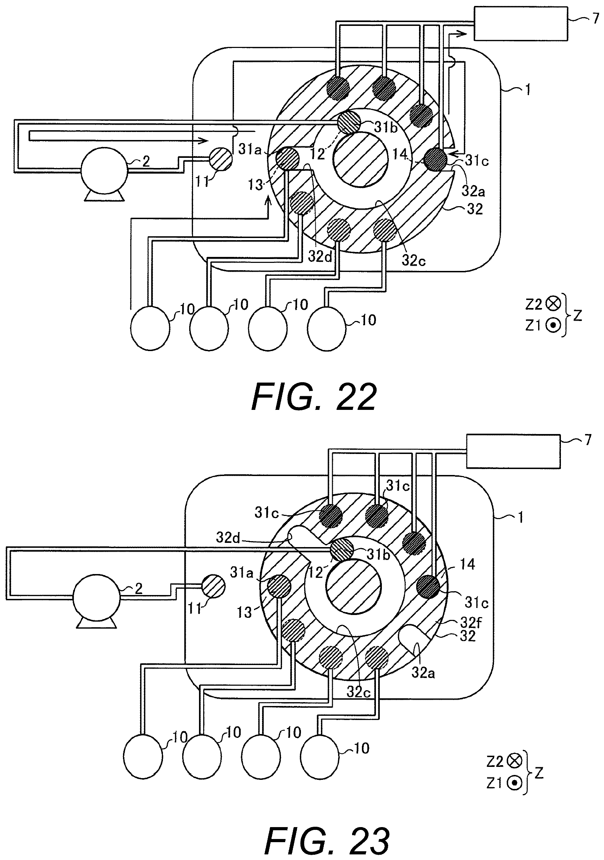

The arrangement of the rotating part 32 when exhausting air will be described based on FIG. 22. When exhausting air from one of the bag-shaped members 10, the enclosure interior space communication portion 32a is arranged at a position to be communicated to corresponding one of the external air supply and exhaust ports 14 via corresponding one of the third holes 31c. The circular portion 32c of the groove portion 32b is communicated to the air discharge port 12 via the second hole 31b. The protruding portion 32d is arranged at a position to be communicated to corresponding one of the object connection ports 13 via corresponding one of the first holes 31a. Thus, the corresponding one of the first holes 31a and the second hole 31b are located in the groove portion 32b and the corresponding one of the third holes 31c is located in the enclosure interior space communication portion 32a when exhausting air from the one of the bag-shaped members 10. In particular, the corresponding one of the first holes 31a is located in the protruding portion 32d, the second hole 31b is located in the circular portion 32c and the corresponding one of the third holes 31c is located in the enclosure interior space communication portion 32a when exhausting air from the one of the bag-shaped members 10.

The air is drawn from the bag-shaped member 10 by the pump 2, and the air flows from the bag-shaped member 10 to the object connection port 13. Then, the air flows from the object connection port 13 to the groove portion 32b. The air flowing into the groove portion 32b is drawn into the pump 2 through the air discharge port 12 that is communicated to the groove portion 32b. In other words, the air in the groove portion 32b is discharged by the air discharge port 12. The air drawn into the pump 2 is supplied to the interior space 11a of the enclosure 1 via the air supply port 11. Then, the air flows from the interior space 1a of the enclosure 1 to the external air supply and exhaust port 14 through the enclosure interior space communication portion 32a, and the air is discharged to the outside.

The control of the control unit 4 when exhausting air is basically identical to the control shown in FIG. 14, except that the control unit 4 drives the pump 2 for exhausting air. Specifically, after stopping the motor 8a of the drive unit 8 to stop the rotation of the rotating part 32 in step S25, the control unit 4 drives the pump 2 to exhaust air from the bag-shaped member 10 in step S26. If the pressure detected by the pressure sensor 6 provided to the second pipe 30b is less than the predetermined value in step S27, then the control unit 4 stops the pump 2 in step S28 and proceeds to step S29.

### (Arrangement of Rotating Part In Maintained State)

As shown in FIG. 23, in the maintained state of the inflated or deflated state of the bag-shaped members 10 for which supplying air and exhausting air is stopped, the enclosure interior space communication portion 32a is not communicated to the first holes 31a and the third holes 31c. In addition, with the groove portion 32b, the circular portion 32c is communicated to the second hole 31b, but the groove portion 32b (the circular portion 32c and the protruding portion 32d) is not communicated to the first holes 31a and the third holes 31c. Thus, the first holes 31a and the third holes 31c are blocked by the rotating part 32 when maintaining the inflated state or the deflated state of the bag-shaped members 10. Therefore, neither a flow path between the first holes 31a and the second hole 31b nor a flow path between the second hole 31b and the third holes 31c is not formed. Thus, air is not supplied to the pump 2 either from the outside or from the bag-shaped members 10. As a result, air is neither supplied to the bag-shaped members 10 nor discharged from the bag-shaped members 10, and the bag-shaped members 10 can maintain the inflated state or the deflated state.

Other configurations of the air supply device 200 according to the second embodiment are the same as those of the air supply device 100 according to the first embodiment described above.

### (Effects of Second Embodiment)

In the second embodiment, the following effects can be obtained.

In the second embodiment, as described above, the air supply device 200 comprises the enclosure 1, the pump 2, and the flow path switching unit 3. The enclosure 1 has the sealed interior space 1a for storing air therein. The pump 2 is provided outside the enclosure 1. The pump 2 is configured to supply air to the interior space 1a of the enclosure 1. The flow path switching unit 3 includes the pedestal part 31 mounted inside the enclosure 1, the rotating part 32 rotatably mounted on the pedestal part 31, the rotating part 32 having the enclosure interior space communication portion 32a and the groove portion 32b, and the drive unit 8 configured to rotate the rotating part 32. The enclosure 1 includes the air supply port 11 for supplying air supplied from the pump 2 to the interior space 1a of the enclosure 1, the air discharge port 12 for discharging air from the groove portion 32b of the rotating part 32, and the object connection ports 13 for supplying air to or exhausting air from the bag-shaped members 10. The pedestal part 31 includes the first holes 31a that are communicated to the object connection ports 13, and the second hole 31b that is communicated to the air discharge port 12. The enclosure interior space communication portion 32a is communicated to the air supply port 11 through the interior space 1a of the enclosure 1. The groove portion 32b is separated from the enclosure interior space communication portion 32a.

The enclosure interior space communication portion 32a includes a notch or a through hole that is provided on the outer portion of the rotating part 32. The notch or the through hole opens toward the pedestal part 31 and the enclosure 1 so as to be communicated to the air supply port 11 through the interior space 1a of the enclosure 1. The groove portion 32b opens toward the pedestal part 31 so as not to be directly communicated to the enclosure interior space communication portion 32a.

With this configuration, the rotating part 32 includes the enclosure interior space communication portion 32a on the outer portion of the rotating part 32. Therefore, the sealed interior space 1a of the enclosure 1 can be used as a flow path for supplying air or exhausting air, and thus there is no need to provide a groove for forming a flow path in an outer circumference of the rotating part 32. With this configuration, enlargement of the flow path switching unit 3 can be suppressed. As a result, enlargement of the air supply device 200 can be suppressed.

In the second embodiment, as described above, the enclosure 1 includes the external air supply and exhaust ports 14 for supplying air from the outside of the enclosure 1 to the interior space 1a of the enclosure or exhausting air from the interior space 1a of the enclosure 1 to the outside of the enclosure 1. The pedestal part 31 includes the third holes 31c that are communicated to the external air supply and exhaust ports 14.

The air discharge port 12 is connected to the air intake port 2a of the pump 2.

When supplying air to one of the bag-shaped members 10, the control unit 4 is configured to control the drive unit 8 to rotate the rotating part 32 such that the enclosure interior space communication portion 32a forms the flow path between one of the first holes 31a and the air supply port 11 through the interior space 1a of the enclosure 1 and the groove portion 32b forms the flow path between the second hole 31b and one of the third holes 31c. When exhausting air from the one of the bag-shaped members 10, the control unit 4 is configured to control the drive unit 8 to rotate the rotating part 32 such that the enclosure interior space communication portion 32a forms the flow path between the air supply port 11 and the one of the third holes 31c through the interior space 1a of the enclosure 1 and the groove portion 32b forms the flow path between the one of the first holes 31a and the second hole 31b. With this configuration, when supplying air to the one of the bag-shaped members 10, air flows in the order of the one of the third holes 31c, the second hole 31b, the pump 2, the air supply port 11, the interior space 1a of the enclosure 1, the one of the first holes 31a, and the one of the bag-shaped members 10 from one of the external air supply and exhaust ports 14. Thus, air can be supplied to the one of the bag-shaped members 10 from the outside of the enclosure 1. Also, when exhausting air from the one of the bag-shaped members 10, air flows in the order of the one of the first holes 31a, the second hole 31b, the pump 2, the air supply port 11, the one of the third holes 31c, and the one of the external air supply and exhaust ports 14 from the one of the bag-shaped members 10. Thus, air inside the one of the bag-shaped members 10 can be discharged to the outside of the enclosure.

In the second embodiment, as described above, the pedestal part 31 includes the first holes 31a and the third holes 31c that are provided corresponding to the bag-shaped members 10. The control unit 4 is configured to switch the bag-shaped members 10 for supplying and exhausting air by rotating the rotating part 32 to switch the first holes 31a and the third holes 31c to be communicated to the enclosure interior space communication portion 32a and the groove portion 32b. With this configuration, among the first holes 31a and the third holes 31c, air flows to one of the first holes 31a and one of the third hole 31c that are communicated to the enclosure interior space communication portion 32a and the groove portion 32b, while air does not flow to other first holes 31a and other third holes 31c. With this configuration, it is possible to supply and exhaust air to a desired one of the bag-shaped members 10 among the bag-shaped members 10.

In the second embodiment, as described above, the control unit 4 is configured to switch the bag-shaped members 10 for supplying and exhausting air by rotating the rotating part 32 at the predetermined angle or at the predetermined interval. With this configuration, switching of the bag-shaped members 10 can be easily performed by setting the predetermined angle or the predetermined interval in accordance with positions of the first holes 31a, the second hole 31b and the third holes 31c.

In the second embodiment, as described above, when viewed from the pedestal part 31 side, the enclosure interior space communication portion 32a has an elliptical shape inwardly depressed. The groove portion 32b has the circular portion 32c that is communicated to the second hole 31b, and the protruding portion 32d that is selectively communicated to the first holes 31a and that outwardly protrudes from the circular portion 32c. With this configuration, the outer circumferences of the enclosure interior space communication portion 32a and the groove portion 32b can be aligned with the outer circumferences of the first hole 31a, the second hole 31b and the third hole 31c without misalignment. Thus, it is possible to prevent supplying air to the bag-shaped member 10 or exhausting air from the bag-shaped member 10 in a state in which the first hole 31a, the second hole 31b and the third hole 31c are partially blocked by the rotating part 32.

Other effects of the air supply device 200 according to the second embodiment are the same as those of the air supply device 100 according to the first embodiment described above.

### MODIFICATION EXAMPLES

The embodiments disclosed here should be considered in all respects to be illustrative and not restrictive. The scope of the invention is indicated by the claims, not by the description of the embodiments described above, and furthermore includes all changes (modification examples) within the meaning and scope of protection defined by the appended claims.

For example, in the first and second embodiments above, examples are shown in which the external air supply and exhaust ports are provided, but the present invention is not limited to this. For example, it may be configured without an external air supply and exhaust port.

In the first and second embodiments, examples are shown in which air is supplied to and exhausted from a single bag-shaped member, but the present invention is not limited to this. For example, air may be simultaneously supplied to a plurality of bag-shaped members, and may be simultaneously exhausted from a plurality of bag-shaped members. In this case, the groove portion may have a plurality of protruding portions.

In the first and second embodiments, examples are shown in which the plurality of the bag-shaped members are provided, but the present invention is not limited to this. For example, there may be only one bag-shaped member. In this case, one first hole and one third hole are provided in the pedestal part, and one object connection port and one external air supply and exhaust ports are provided in the enclosure.

In the first and second embodiments, examples are shown in which the pressure sensors are arranged near the air outlet port of the pump and near the air intake port of the pump, but the present invention is not limited to this. For example, they may be provided near the air supply and exhaust ports of the bag-shaped members.

In the first and second embodiments, examples are shown in which the control unit rotates the rotating part by every predetermined angle, but the present invention is not limited to this. For example, the control unit may rotate the rotating part at every predetermined interval. In this case, the predetermined interval may be set, from the initial position, corresponding to the interval at which the first holes are arranged, or corresponding to the interval at which the first holes and the third holes are arranged.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of an air supply device in an upright position on a horizontal surface. Accordingly, these directional terms, as utilized to describe the air supply device should be interpreted relative to an air supply device in an upright position on a horizontal surface.

The phrase "at least one of" as used in this disclosure means "one or more" of a desired choice. For one example, the phrase "at least one of" as used in this disclosure means "only one single choice" or "both of two choices" if the number of its choices is two. For another example, the phrase "at least one of" as used in this disclosure means "only one single choice" or "any combination of equal to or more than two choices" if the number of its choices is equal to or more than three. Also, the term "and/or" as used in this disclosure means "either one or both of".

The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time.

## Claims

1. An air supply device (100, 200) comprising:
an enclosure (1) having a sealed interior space (1a) for storing air therein;
a pump (2) provided outside the enclosure (1), the pump (2) being configured to supply air to the interior space (1a) of the enclosure (1); and
a flow path switching unit (3) including
a pedestal part (31) mounted inside the enclosure (1),
a rotating part (32) rotatably mounted on the pedestal part (31), the rotating part (32) having an enclosure interior space communication portion (32a) and a groove portion (32b), and
a drive unit (8) configured to rotate the rotating part (32),
the enclosure (1) including
an air supply port (11) configured to supply air supplied from the pump (2) to the interior space (1a) of the enclosure (1),
an air discharge port (12) configured to discharge air from the groove portion (32b) of the rotating part (32), and
at least one object connection port (13) configured to supply air to or exhaust air from at least one object,
the pedestal part (31) including
at least one first hole (31a) that is communicated to the at least one object connection port (13), and
a second hole (31b) that is communicated to the air discharge port (12),
the enclosure interior space communication portion (32a) being communicated to the air supply port (11) through the interior space (1a) of the enclosure (1), and
the groove portion (32b) being separated from the enclosure interior space communication portion (32a),
**characterized in that**,
when viewed from the pedestal part (31) side, the enclosure interior space communication portion (32a) has an elliptical shape inwardly depressed, and
the groove portion (32b) has
a circular portion (32c) that is communicated to the second hole (31b), and
a protruding portion (32d) that is selectively communicated to the at least one first hole (31a) and that outwardly protrudes from the circular portion (32c).

2. The air supply device (100, 200) according to claim 1, wherein
the enclosure interior space communication portion (32a) includes a notch or a through hole that is provided on an outer portion of the rotating part (32), the notch or the through hole opening toward the pedestal part (31) and the enclosure (1) so as to be communicated to the air supply port (11) through the interior space (1a) of the enclosure (1), and
the groove portion (32b) is provided on an inner portion of the rotating part (32), the groove portion (32b) opening toward the pedestal part (31) so as not to be directly communicated to the enclosure interior space communication portion (32a).

3. The air supply device (100, 200) according to claim 1 or 2, wherein
the air supply device (100, 200) is configured such that:
one of the at least one first hole (31a) is located in the enclosure interior space communication portion (32a) when supplying air to one of the at least one object, and
the one of the at least one first hole (31a) and the second hole (31b) are located in the groove portion (32b) when exhausting air from the one of the at least one object.

4. The air supply device (100, 200) according to any one of claims 1 to 3, further comprising
a control unit (4) configured to control the drive unit (8) to rotate the rotating part (32) to a position at which a position of one of the at least one first hole (31a) and a position of the enclosure interior space communication portion (32a) coincide to each other when supplying air to one of the at least one object,
the control unit (4) being configured to control the drive unit (8) to rotate the rotating part (32) to a position at which the one of the at least one first hole (31a) and the second hole (31b) are communicated to each other through the groove portion (32b) when exhausting air from the one of the at least one object.

5. The air supply device (100, 200) according to claim 4, wherein
the control unit (4) is configured to switch the at least one object for supplying and exhausting air by rotating the rotating part (32) at a predetermined angle or at a predetermined interval.

6. The air supply device (100, 200) according to claim 4 or 5, further comprising
a pressure sensor (6) configured to measure a pressure of air supplied to the interior space (1a) of the enclosure (1) or exhausted from the interior space (1a) of the enclosure (1),
when supplying air to the one of the at least one object, the control unit (4) being configured to control the drive unit (8) to rotate the rotating part (32) to a position at which no flow path is formed between the at least one first hole (31a) and the second hole (31b) while the pressure detected by the pressure sensor (6) is higher than or equal to a predetermined value.

7. The air supply device (100, 200) according to claim 6, wherein,
when exhausting air from the one of the at least one object, the control unit (4) is configured to control the drive unit (8) to rotate the rotating part (32) to a position at which no flow path is formed between the at least one first hole (31a) and the second hole (31b) while the pressure detected by the pressure sensor (6) is less than a predetermined value.

8. The air supply device (100, 200) according to any one of claims 4 to 7, wherein
the control unit (4) is configured to stop a drive of the pump (2) when rotating the rotating part (32).

9. The air supply device (100, 200) according to any one of claims 4 to 8, wherein
the rotating part (32) includes a gear portion (32e) on an outer circumferential surface of the rotating part (32), and
the control unit (4) is configured to control the drive unit (8) to rotate the rotating part (32) in a state in which the drive unit (8) and the gear portion (32e) are engaged.

10. The air supply device (200) according to any one of claims 4 to 9, wherein:
the enclosure (1) includes at least one external air supply and exhaust port (14) for supplying air from an outside of the enclosure (1) to the interior space (1a) of the enclosure (1) or exhausting air from the interior space (1a) of the enclosure (1) to the outside of the enclosure (1), the at least one external air supply and exhaust port (14) being different from any one of the air supply port (11) and the air discharge port (12); and
the pedestal part (31) includes at least one third hole (31c) that is communicated to the at least one external air supply and exhaust port (14).

11. The air supply device (200) according to claim 10, wherein
the air supply device (200) is configured such that:
when supplying air to one of the at least one object, one of the at least one first hole (31a) is located in the enclosure interior space communication portion (32a), and the second hole (31b) and one of the at least one third hole (31c) are located in the groove portion (32b); and,
when exhausting air from the one of the at least one object, the one of the at least one first hole (31a) and the second hole (31b) are located in the groove portion (32b), and the one of the at least one third hole (31c) is located in the enclosure interior space communication portion (32a).

12. The air supply device (200) according to claim 10 or 11, wherein
the air discharge port (12) is connected to an air intake port (2a) of the pump (2).

13. The air supply device (200) according to any one of claims 10 to 12, wherein,
when supplying air to one of the at least one object, the control unit (4) is configured to control the drive unit (8) to rotate the rotating part (32) such that the enclosure interior space communication portion (32a) forms a flow path between one of the at least one first hole (31a) and the air supply port (11) through the interior space (1a) of the enclosure (1), and such that the groove portion (32b) forms a flow path between the second hole (31b) and one of the at least one third hole (31c), and,
when exhausting air from the one of the at least one object, the control unit (4) is configured to control the drive unit (8) to rotate the rotating part (32) such that the enclosure interior space communication portion (32a) forms a flow path between the air supply port (11) and the one of the at least one third hole (31c) through the interior space (1a) of the enclosure (1), and such that the groove portion (32b) forms a flow path between the one of the at least one first hole (31a) and the second hole (31b).

14. The air supply device (200) according to any one of claims 10 to 13, wherein
the at least one first hole (31a) and the at least one third hole (31c) include a plurality of first holes (31a) and a plurality of third holes (31c) that are provided corresponding to a plurality of objects, and
the control unit (4) is configured to switch the at least one object for supplying and exhausting air by rotating the rotating part (32) to switch the first holes (31a) and the third holes (31c) to be communicated to the enclosure interior space communication portion (32a) and the groove portion (32b).

## Patentansprüche

1. Luftzufuhrvorrichtung (100, 200), die aufweist:
ein Gehäuse (1) mit einem abgedichteten Innenraum (1a) zum Speichern von Luft darin;
eine Pumpe (2), die außerhalb des Gehäuses (1) vorgesehen ist, wobei die Pumpe (2) konfiguriert ist, dem Innenraum (1a) des Gehäuses (1) Luft zuzuführen; und
eine Strömungsweg-Schalteinheit (3), die aufweist:
einen Sockelteil (31), der im Inneren des Gehäuses (1) montiert ist,
einen Drehteil (32), der drehbar auf dem Sockelteil (31) montiert ist, wobei der Drehteil (32) einen Gehäuseinnenraum-Verbindungsabschnitt (32a) und einen Nutabschnitt (32b) aufweist, und
eine Antriebseinheit (8), die konfiguriert ist, den Drehteil (32) zu drehen,
wobei das Gehäuse (1) aufweist:
eine Luftzufuhröffnung (11), die konfiguriert ist, dem Innenraum (1a) des Gehäuses (1) von der Pumpe (2) zugeführte Luft zuzuführen,
eine Luftauslassöffnung (12), die konfiguriert ist, Luft aus dem Nutabschnitt (32b) des Drehteils (32) abzugeben, und
mindestens eine Objektverbindungsöffnung (13), die konfiguriert ist,
mindestens einem Objekt Luft zuzuführen oder Luft daraus abzugeben,
wobei der Sockelteil (31) aufweist:
mindestens ein erstes Loch (31a), das mit der mindestens einen Objektverbindungsöffnung (13) in Verbindung steht, und
ein zweites Loch (31b), das mit der Luftauslassöffnung (12) in Verbindung steht,
wobei der Innenraum-Verbindungsabschnitt (32a) des Gehäuses durch den Innenraum (1a) des Gehäuses (1) mit der Luftzufuhröffnung (11) in Verbindung steht, und
wobei der Nutabschnitt (32b) von dem Innenraum-Verbindungsabschnitt (32a) des Gehäuses getrennt ist,
**dadurch gekennzeichnet, dass**,
von der Seite des Sockelteils (31) aus gesehen, der Verbindungsabschnitt (32a) des Gehäuseinnenraums eine elliptische Form aufweist, die nach innen eingedrückt ist, und
der Nutabschnitt (32b) aufweist
einen kreisförmigen Abschnitt (32c), der mit dem zweiten Loch (31b) in Verbindung steht, und
einen vorspringenden Abschnitt (32d), der selektiv mit dem mindestens einen ersten Loch (31a) in Verbindung steht und der von dem kreisförmigen Abschnitt (32c) nach außen vorsteht.

2. Luftzufuhrvorrichtung (100, 200) nach Anspruch 1, wobei der Gehäuseinnenraum-Verbindungsabschnitt (32a) eine Kerbe oder ein Durchgangsloch enthält, die bzw. das an einem äußeren Abschnitt des Drehteils (32) vorgesehen ist, wobei sich die Kerbe oder das Durchgangsloch zum Sockelteil (31) und zum Gehäuse (1) öffnet, um mit der Luftzufuhröffnung (11) durch den Innenraum (1a) des Gehäuses (1) in Verbindung zu stehen, und der Nutabschnitt (32b) an einem inneren Abschnitt des Drehteils (32) vorgesehen ist, wobei sich der Nutabschnitt (32b) zum Sockelteil (31) öffnet, so dass er nicht direkt mit dem Gehäuseinnenraum-Verbindungsabschnitt (32a) des Gehäuses in Verbindung steht.

3. Luftzufuhrvorrichtung (100, 200) nach Anspruch 1 oder 2, wobei die Luftzufuhrvorrichtung (100, 200) so konfiguriert ist, dass:
eines des mindestens einen ersten Lochs (31a) sich in dem Gehäuseinnenraum-Verbindungsabschnitt (32a) befindet, wenn einem des mindestens einen Objekts Luft zugeführt wird, und
das eine des mindestens einen ersten Lochs (31a) und das zweite Loch (31b) in dem Nutabschnitt (32b) angeordnet ist, wenn Luft von dem einen von dem mindestens einen Objekt abgeleitet wird.

4. Luftzufuhrvorrichtung (100, 200) nach einem der Ansprüche 1 bis 3, die ferner aufweist:
eine Steuereinheit (4), die konfiguriert ist, die Antriebseinheit (8) zu steuern, den Drehteil (32) in eine Position zu drehen, in der eine Position des mindestens einen ersten Lochs (31a) und eine Position des Gehäuseinnenraum-Verbindungsabschnitts (32a) miteinander übereinstimmen, wenn einem des mindestens einen Objekts Luft zugeführt wird,
wobei die Steuereinheit (4) konfiguriert ist, die Antriebseinheit (8) zu steuern, den Drehteil (32) in eine Position zu drehen, in der das eine des mindestens einen ersten Lochs (31a) und das zweite Loch (31b) durch den Nutabschnitt (32b) miteinander verbunden sind, wenn Luft von dem einen des mindestens einen Objekts abgeleitet wird.

5. Luftzufuhrvorrichtung (100, 200) nach Anspruch 4, wobei die Steuereinheit (4) konfiguriert ist, das mindestens eine Objekt zum Zuführen und Ableiten von Luft durch Drehen des Drehteils (32) in einem vorbestimmten Winkel oder in einem vorbestimmten Intervall zu schalten.

6. Luftzufuhrvorrichtung (100, 200) nach Anspruch 4 oder 5, die ferner aufweist:
einen Drucksensor (6), der konfiguriert ist, einen Druck der Luft zu messen, die dem Innenraum (1a) des Gehäuses (1) zugeführt oder aus dem Innenraum (1a) des Gehäuses (1) abgeleitet wird,
beim Zuführen von Luft zu dem einen des mindestens einen Objekts die Steuereinheit (4) konfiguriert ist, die Antriebseinheit (8) zu steuern, den Drehteil (32) in eine Position zu drehen, in der kein Strömungsweg zwischen dem mindestens einen ersten Loch (31a) und dem zweiten Loch (31b) gebildet wird, während der von dem Drucksensor (6) erfasste Druck höher als oder gleich einem vorbestimmten Wert ist.

7. Luftzufuhrvorrichtung (100, 200) nach Anspruch 6, wobei,
die Steuereinheit (4) konfiguriert ist, die Antriebseinheit (8) zu steuern, den Drehteil (32) in eine Position zu drehen, in der kein Strömungsweg zwischen dem mindestens einen ersten Loch (31a) und dem zweiten Loch (31b) gebildet wird, während der von dem Drucksensor (6) erfasste Druck kleiner als ein vorbestimmter Wert ist.

8. Luftzufuhrvorrichtung (100, 200) nach einem der Ansprüche 4 bis 7, wobei die Steuereinheit (4) konfiguriert ist, einen Antrieb der Pumpe (2) zu stoppen, wenn der Drehteil (32) gedreht wird.

9. Luftzufuhrvorrichtung (100, 200) nach einem der Ansprüche 4 bis 8, wobei der Drehteil (32) einen Zahnradabschnitt (32e) an einer Außenumfangsfläche des Drehteils (32) aufweist, und
die Steuereinheit (4) konfiguriert ist, die Antriebseinheit (8) zu steuern, den Drehteil (32) in einem Zustand zu drehen, in dem die Antriebseinheit (8) und der Zahnradabschnitt (32e) in Eingriff sind.

10. Luftzufuhrvorrichtung (200) nach einem der Ansprüche 4 bis 9, wobei:
das Gehäuse (1) mindestens eine externe Luftzufuhr- und Abluftöffnung (14) zum Zuführen von Luft von außerhalb des Gehäuses (1) in den Innenraum (1a) des Gehäuses (1) oder zum Abführen von Luft aus dem Innenraum (1a) des Gehäuses (1) nach außerhalb des Gehäuses (1) aufweist, wobei die mindestens eine externe Luftzufuhr- und Abluftöffnung (14) sich von der Luftzufuhröffnung (11) oder der Luftauslassöffnung (12) unterscheidet; und
der Sockelteil (31) mindestens ein drittes Loch (31c) aufweist, das mit der mindestens einen externen Luftzufuhr- und Abluftöffnung (14) in Verbindung steht.

11. Luftzufuhrvorrichtung (200) nach Anspruch 10, wobei die Luftzufuhrvorrichtung (200) so konfiguriert ist, dass:
beim Zuführen von Luft zu einem des mindestens einen Objekts eines des mindestens einen ersten Lochs (31a) in dem Gehäuseinnenraum-Verbindungsabschnitt (32a) angeordnet ist und das zweite Loch (31b) und eines der mindestens einen dritten Lochs (31c) in dem Nutabschnitt (32b) angeordnet sind; und,
beim Abführen von Luft von dem einen des mindestens einen Objekts das eine des mindestens einen ersten Lochs (31a) und das zweite Loch (31b) in dem Nutabschnitt (32b) angeordnet ist und das eine des mindestens einen dritten Lochs (31c) in dem Gehäuseinnenraum-Verbindungsabschnitt (32a) angeordnet ist.

12. Luftzufuhrvorrichtung (200) nach Anspruch 10 oder 11, wobei
die Luftauslassöffnung (12) mit einer Lufteinlassöffnung (2a) der Pumpe (2) verbunden ist.

13. Luftzufuhrvorrichtung (200) nach einem der Ansprüche 10 bis 12, wobei,
wenn dem einen des mindestens einen Objekts Luft zugeführt wird, die Steuereinheit (4) konfiguriert ist, die Antriebseinheit (8) zu steuern, den Drehteil (32) zu drehen, so dass der Gehäuseinnenraum-Verbindungsabschnitt (32a) einen Strömungsweg zwischen einem des mindestens einen ersten Lochs (31a) und der Luftzufuhröffnung (11) durch den Innenraum (1a) des Gehäuses (1) bildet, und so dass der Nutabschnitt (32b) einen Strömungsweg zwischen dem zweiten Loch (31b) und einem des mindestens einen dritten Lochs (31c) bildet, und,
beim Abführen von Luft von dem einen des mindestens einen Objekts die Steuereinheit (4) konfiguriert ist, die Antriebseinheit (8) zu steuern, den Drehteil (32) zu drehen, so dass der Gehäuseinnenraum-Verbindungsabschnitt (32a) einen Strömungsweg zwischen der Luftzufuhröffnung (11) und dem einen des mindestens einen dritten Lochs (31c) durch den Innenraum (1a) des Gehäuses (1) bildet, und so, dass der Nutabschnitt (32b) einen Strömungsweg zwischen dem einen von dem mindestens einen des ersten Lochs (31a) und dem zweiten Loch (31b) bildet.

14. Luftzufuhrvorrichtung (200) nach einem der Ansprüche 10 bis 13, wobei
das mindestens eine erste Loch (31a) und das mindestens eine dritte Loch (31c) mehrere erste Löcher (31a) und mehrere dritte Löcher (31c) umfassen, die entsprechend mehreren Objekten vorgesehen sind, und
die Steuereinheit (4) konfiguriert ist, das mindestens eine Objekt zum Zuführen und Abführen von Luft durch Drehen des Drehteils (32) zu schalten, um die ersten Löcher (31a) und die dritten Löcher (31c) so zu schalten, dass sie mit dem Gehäuseinnenraum-Verbindungsabschnitt (32a) und dem Nutabschnitt (32b) verbunden werden.

## Revendications

1. Dispositif d'alimentation en air (100, 200), comprenant :
une enceinte (1) ayant un espace intérieur étanche (1a) destiné à stocker de l'air ;
une pompe (2) disposée à l'extérieur de l'enceinte (1), ladite pompe (2) étant prévue pour refouler de l'air vers l'espace intérieur (1a) de l'enceinte (1) ; et
une unité de commutation de trajet d'écoulement (3) comprenant
une partie de socle (31) montée à l'intérieur de l'enceinte (1),
une partie rotative (32) montée de manière rotative sur la partie de socle (31), ladite partie rotative (32) ayant une partie de communication (32a) avec l'espace intérieur de l'enceinte et une section de rainure (32b), et une unité d'entraînement (8) prévue pour faire tourner la partie rotative (32),
l'enceinte (1) comprenant
un orifice d'alimentation en air (11) prévu pour alimenter en air refoulé de la pompe (2) l'espace intérieur (1a) de l'enceinte (1),
un orifice d'évacuation d'air (12) prévu pour évacuer l'air de la section de rainure (32b) de la partie rotative (32), et
au moins un orifice de connexion d'objet (13) prévu pour alimenter en air au moins un objet ou extraire l'air de celui-ci,
la partie de socle (31) comprenant
au moins un premier trou (31a) communiquant avec ledit au moins un orifice de connexion d'objet (13), et
un deuxième trou (31b) communiquant avec l'orifice d'évacuation d'air (12),
la partie de communication (32a) avec l'espace intérieur de l'enceinte communiquant avec l'orifice d'alimentation en air (11) par l'espace intérieur (1a) de l'enceinte (1), et
la section de rainure (32b) étant séparée de la partie de communication (32a) avec l'espace intérieur de l'enceinte,
**caractérisé en ce que**,
vue depuis la partie de socle (31), la partie de communication (32a) avec l'espace intérieur de l'enceinte a une forme elliptique déprimée vers l'intérieur, et
la section de rainure (32b) a
une partie circulaire (32c) communiquant avec le deuxième trou (31b), et
une partie saillante (32d) communiquant sélectivement avec ledit au moins un premier trou (31a) et faisant saillie vers l'extérieur depuis la partie circulaire (32c).

2. Dispositif d'alimentation en air (100, 200) selon la revendication 1, où
la partie de communication (32a) avec l'espace intérieur de l'enceinte présente une encoche ou un trou traversant prévus sur une partie extérieure de la partie rotative (32), ladite encoche ou ledit trou traversant étant ouverts vers la partie de socle (31) et l'enceinte (1) de manière à communiquer avec l'orifice d'alimentation en air (11) par l'espace intérieur (1a) de l'enceinte (1), et
la section de rainure (32b) étant prévue sur une partie intérieure de la partie rotative (32), ladite section de rainure (32b) étant ouverte vers la partie de socle (31) de manière à ne pas communiquer directement avec la partie de communication (32a) avec l'espace intérieur de l'enceinte.

3. Dispositif d'alimentation en air (100, 200) selon la revendication 1 ou la revendication 2, où
le dispositif d'alimentation en air (100, 200) est prévu de sorte que :
un trou desdits au moins un premier trou (31a) est présenté dans la partie de communication (32a) avec l'espace intérieur de l'enceinte lors de l'alimentation en air d'un objet desdits au moins un objet, et
un trou desdits au moins un premier trou (31a) et le deuxième trou (31b) sont présentés dans la section de rainure (32b) lors de l'extraction de l'air de l'objet desdits au moins un objet.

4. Dispositif d'alimentation en air (100, 200) selon l'une des revendications 1 à 3, comprenant en outre
une unité de commande (4) prévue pour commander l'unité d'entraînement (8) afin de faire tourner la partie rotative (32) vers une position où un emplacement d'un des au moins un premier trou (31a) et un emplacement de la partie de communication (32a) avec l'espace intérieur de l'enceinte coïncident l'un avec l'autre lors de l'alimentation en air d'un objet desdits au moins un objet,
ladite unité de commande (4) étant prévue pour commander l'unité d'entraînement (8) afin de faire tourner la partie rotative (32) vers une position où le premier trou (31a) et le deuxième trou (31b) communiquent l'un avec l'autre par la section de rainure (32b) lors de l'extraction de l'air de l'objet desdits au moins un objet.

5. Dispositif d'alimentation en air (100, 200) selon la revendication 4, où l'unité de commande (4) est prévue pour commuter ledit au moins un objet pour l'alimentation et l'extraction d'air par rotation de la partie rotative (32) suivant un angle prédéterminé ou à intervalle prédéterminé.

6. Dispositif d'alimentation en air (100, 200) selon la revendication 4 ou la revendication 5, comprenant en outre .
un capteur de pression (6) prévu pour mesurer la pression de l'air refoulé vers l'espace intérieur (1a) de l'enceinte (1) ou extrait de l'espace intérieur (1a) de l'enceinte (1),
où, lors de l'alimentation en air de l'objet desdits au moins un objet, l'unité de commande (4) est prévue pour commander l'unité d'entraînement (8) afin de faire tourner la partie rotative (32) vers une position où aucun trajet d'écoulement n'est formé entre ledit au moins un premier trou (31a) et le deuxième trou (31b) lorsque la pression détectée par le capteur de pression (6) est supérieure ou égale à une valeur prédéterminée.

7. Dispositif d'alimentation en air (100, 200) selon la revendication 6, où,
lors de l'extraction d'air de l'objet desdits au moins un objet, l'unité de commande (4) est prévue pour commander l'unité d'entraînement (8) afin de faire tourner la partie rotative (32) vers une position où aucun trajet d'écoulement n'est formé entre ledit au moins un premier trou (31a) et le deuxième trou (31b) lorsque que la pression détectée par le capteur de pression (6) est inférieure à une valeur prédéterminée.

8. Dispositif d'alimentation en air (100, 200) selon l'une des revendications 4 à 7, où
l'unité de commande (4) est prévue pour arrêter l'entraînement de la pompe (2) lors de la rotation de la partie rotative (32).

9. Dispositif d'alimentation en air (100, 200) selon l'une des revendications 4 à 8, où
la partie rotative (32) comprend une partie d'engrenage (32e) sur une surface circonférentielle extérieure de ladite partie rotative (32), et
l'unité de commande (4) est prévue pour commander l'unité d'entraînement (8) afin de faire tourner la partie rotative (32) dans un état où l'unité d'entraînement (8) et la partie d'engrenage (32e) sont en prise l'une avec l'autre.

10. Dispositif d'alimentation en air (200) selon l'une des revendications 4 à 9, où :
l'enceinte (1) présente au moins un orifice externe d'alimentation et d'extraction d'air (14) pour alimenter en air l'espace intérieur (1a) de l'enceinte (1) depuis l'extérieur de l'enceinte (1) ou pour extraire l'air de l'espace intérieur (1a) de l'enceinte (1) vers l'extérieur de l'enceinte (1), ledit au moins un orifice externe d'alimentation et d'extraction d'air (14) étant différent de l'orifice d'alimentation en air (11) ainsi que de l'orifice d'évacuation d'air (12) ; et
la partie de socle (31) présente au moins un troisième trou (31c) communiquant avec ledit au moins un orifice externe d'alimentation et d'extraction d'air (14).

11. Dispositif d'alimentation en air (200) selon la revendication 10, où ledit dispositif d'alimentation en air (200) est prévu de sorte que :
lors de l'alimentation en air de l'objet desdits au moins un objet, un trou desdits au moins un premier trou (31a) est présenté dans la partie de communication (32a) avec l'espace intérieur de l'enceinte, et le deuxième trou (31b) et un trou desdits au moins un troisième trou (31c) sont présentés dans la section de rainure (32b) ; et,
lors de l'extraction d'air de l'objet desdits au moins un objet, le trou desdits au moins un premier trou (31a) et le deuxième trou (31b) sont présentés dans la section de rainure (32b), et le trou desdits au moins un troisième trou (31c) est présenté dans la partie de communication (32a) avec l'espace intérieur de l'enceinte.

12. Dispositif d'alimentation en air (200) selon la revendication 10 ou la revendication 11, où
l'orifice d'évacuation d'air (12) est relié à un orifice d'admission d'air (2a) de la pompe (2).

13. Dispositif d'alimentation en air (200) selon l'une des revendications 10 à 12, où, lors de l'alimentation en air de l'objet desdits au moins un objet, l'unité de commande (4) est prévue pour commander l'unité d'entraînement (8) afin de faire tourner la partie rotative (32) de sorte que la partie de communication (32a) avec l'espace intérieur de l'enceinte forme un trajet d'écoulement entre un trou desdits au moins un premier trou (31a) et l'orifice d'alimentation en air (11) par l'espace intérieur (1a) de l'enceinte (1), et de sorte que la section de rainure (32b) forme un trajet d'écoulement entre le deuxième trou (31b) et un trou desdits au moins un troisième trou (31c), et,
lors de l'évacuation de l'air de l'objet desdits au moins un objet, l'unité de commande (4) est prévue pour commander l'unité d'entraînement (8) afin de faire tourner la partie rotative (32) de sorte que la partie de communication (32a) avec l'espace intérieur de l'enceinte forme un trajet d'écoulement entre l'orifice d'alimentation en air (11) et le trou desdits au moins un troisième trou (31c) par l'espace intérieur (1a) de l'enceinte (1), et de sorte que la section de rainure (32b) forme un trajet d'écoulement entre le trou desdits au moins un premier trou (31a) et le deuxième trou (31b).

14. Dispositif d'alimentation en air (200) selon l'une des revendications 10 à 13, où ledit au moins un premier trou (31a) et ledit au moins un troisième trou (31c) comprennent une pluralité de premiers trous (31a) et une pluralité de troisièmes trous (31c) prévus pour correspondre à une pluralité d'objets, et
l'unité de commande (4) est prévue pour commuter ledit au moins un objet pour l'alimentation et l'extraction d'air par rotation de la partie rotative (32) afin de commuter les premiers trous (31a) et les troisièmes trous (31c) en communication avec la partie de communication (32a) avec l'espace intérieur de l'enceinte et la section de rainure (32b).
